# EUROPEAN PATENT APPLICATION

(11) **EP 4 852 484 A1**
(43) Date of publication of application: **09.12.2026**
(21) Application number: 25760835.6
(22) Date of filing: 20.02.2025
(51) Int. Cl.: H04W 12/069

(54) **COMMUNICATION METHOD AND APPARATUS**

(30) Priority: 26.02.2024 CN 202410211398
(71) Applicant: HUAWEI TECHNOLOGIES CO., LTD., Shenzhen, Guangdong 518129 (CN)
(72) Inventor: LEI, Zhongding, Shenzhen, Guangdong 518129 (CN); WANG, Haiguang, Shenzhen, Guangdong 518129 (CN); LI, Ruochen, Shenzhen, Guangdong 518129 (CN)
(74) Representative: Huawei European IPR
(86) International application number: PCT/CN2025/078336
(87) International publication number: WO 2025/180293

(57) **Abstract**

A communication method and apparatus are provided, to support and adapt to verification of an identifier of a network function network element in an ACME procedure. The method may include the following steps: A network function network element sends an order request, where the order request includes an identifier of the network function network element, and the order request is for requesting to create an order of issuing a first certificate for the identifier of the network function network element. The network function network element may further receive a challenge message, where the challenge message includes verification manner information indicating a manner of verifying the identifier of the network function network element in the order. The network function network element may further send a challenge response message based on the verification manner information, where the challenge response message includes the identifier of the network function network element and/or first information obtained based on the identifier of the network function network element, and the identifier of the network function network element and/or the first information are/is for verifying the identifier of the network function network element in the order. The network function network element may further obtain the first certificate by sending a certificate request message.

## Description

### CROSS-REFERENCE TO RELATED APPLICATIONS

This application claims priority to Chinese Patent Application No. 202410211398.7, filed with the China National Intellectual Property Administration on February 26, 2024 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

A fifth generation (the fifth generation, 5G) core network uses a network function virtualization (network function virtualization, NFV) technology, to divide functions of a network element into different network functions (network function, NF), and deploy the network functions on a network platform in a virtualized form, to implement fast deployment of the network functions. To simplify communication and access control between network elements, the 5G network uses a service-based architecture (service-based architecture, SBA), through which virtualized network elements interact with each other.

In consideration of network security, interaction between different NF network elements is performed based on authentication certificates of the NF network elements. However, a current automatic certificate management environment (automatic certificate management environment, ACME) protocol authentication procedure does not adapt to the service-based architecture of the 5G network and needs improvement.

### SUMMARY

This application provides a communication method and apparatus, to provide an ACME authentication and certificate issuance mechanism that adapts to a service-based architecture of 5G.

According to a first aspect, a communication method is provided. The method may be implemented by a first communication apparatus. The first communication apparatus may be a network function network element, or may be a component in the network function network element. The component in this application may include, for example, at least one of a chip, a chip system, a processor, a transceiver, a processing unit, or a transceiver unit. The network function network element may serve as an ACME client to request an ACME server to issue a certificate. The ACME server may be a first authentication device.

For example, an execution body is the network function network element. The method may be implemented by using the following steps: The network function network element sends an order request, where the order request includes an identifier of the network function network element, and the order request is for requesting to create an order of issuing a first certificate for the identifier of the network function network element. The network function network element may further receive a challenge message, where the challenge message includes verification manner information, and the verification manner information indicates a manner of verifying the identifier of the network function network element in the order. The network function network element may further send a challenge response message based on the verification manner information, where the challenge response message includes the identifier of the network function network element and/or first information obtained based on the identifier of the network function network element, and the identifier of the network function network element and/or the first information are/is for verifying the identifier of the network function network element in the order. The network function network element may further obtain the first certificate by sending a certificate request message (or a certificate request), where the certificate request message is for completing the order.

Based on the first aspect, the communication method provided in this application can support and adapt to verification of the identifier of the network function network element in an order and challenge phase in an ACME procedure. In addition, the network function network element may further obtain, based on the certificate request, the first certificate issued for the identifier of the network function network element, to implement certificate issuance based on the ACME procedure.

In a possible implementation, the network function network element may send the order request to the first authentication device, and receive a challenge response message sent by the first authentication device. In addition, the network function network element may send the certificate request to the first authentication device, and obtain the first indication issued by the first authentication device based on the certificate request.

In a possible implementation, the verification manner is performing the verification based on trust information of the network function network element, or the verification manner is a trust challenge, an initial trust challenge, a preconfigured trust challenge, an initial trust-based challenge, or the like. In this case, the first information may include the trust information. The trust information includes at least one of the following: a second certificate of the network function network element, where the second certificate includes the identifier of the network function network element; first signature information obtained by signing the identifier of the network function network element; or a first message authentication code obtained based on a symmetric key and the identifier of the network function network element. In other words, when the verification manner information indicates that the verification is performed based on the trust information of the network function network element, the first information may include the trust information.

The trust information may be determined, generated, or created by a second authentication device, and the network function network element may obtain the trust information from the second authentication device. The second authentication device may be an operations, administration and maintenance network element/function (operations, administration and maintenance, OAM) or a network repository function (network repository function, NRF), which is not specifically limited. Alternatively, the trust information may be preconfigured in the network function network element, and the network function network element may obtain the trust information based on preconfigured information. Correspondingly, the first authentication device may perform the verification based on the trust information.

Based on this implementation, authentication and certificate issuance in the ACME procedure may be performed based on initial trust of the identifier of the network function network element. For example, an authentication period of the trust information may be different from that of ACME authentication. Alternatively, it may be understood that the trust information obtained based on the identifier of the network function network element may be used as a prerequisite or guarantee that the authentication of the trust information succeeds in the ACME procedure.

In a possible implementation, the challenge response message includes the identifier of the network function network element, and the verification manner is performing the verification based on first key verification information stored in a network repository function network element, performing an NRF registration challenge, or the like. In other words, the verification manner information indicates to perform the verification based on the first key verification information stored in the network repository function network element.

In a possible implementation, the network function network element may further send a registration request message to the network repository function network element, where the registration request message includes the identifier of the network function network element and the first key verification information, and the first key verification information is determined based on a public key of an account of the network function network element. The registration request message may be sent before or after the network function network element sends an account request. This is not specifically limited.

Based on this implementation, the first authentication device may obtain the first key verification information from the network repository function network element based on the identifier of the network function network element, and verify the identifier of the network function network element based on the first key verification information.

In a possible implementation, the account request further includes information about the network repository function network element. Therefore, the network function network element may indicate, to the first authentication device by using the information, the network repository function network element that stores the first key verification information, so that the first authentication device can determine to obtain the first key verification information from the network function network element.

In a possible implementation, if the verification manner is performing the verification based on a first token issued by the network repository function network element, or if a challenge type includes a token challenge, the first information includes the first token. Correspondingly, the first authentication device may verify the identifier of the network function network element based on the first token carried in the challenge response message.

In a possible implementation, the first token is obtained based on a private key of the network repository function network element. Correspondingly, the first authentication device may verify the first token based on a public key of the network repository function network element, to verify the identifier of the network function network element.

In a possible implementation, the network function network element may further obtain the first token from the network repository function network element.

In a possible implementation, the network function network element may send a token request to the network repository function network element, where the token request is for requesting the first token, and the token request includes the identifier of the network function network element; and the network function network element may further receive the first token from the network repository function network element. Therefore, the network function network element may obtain the first token by sending the token request.

In a possible implementation, the token request further includes information indicating that the token of the network function network element is used by the first authentication device to verify the identifier of the network function network element; and/or the token request further includes indication information of the public key of the account of the network function network element or an account public key. The information indicating that the token of the network function network element is used by the first authentication device to verify the identifier of the network function network element may also be described as information indicating that the token of the network function network element is for performing token verification or a token challenge. The network repository function network element may generate, based on the information, the first token for performing a token challenge.

In a possible implementation, the first token may further include the information indicating that the token of the network function network element is used by the first authentication device to verify the identifier of the network function network element. Correspondingly, the first authentication device may perform a token challenge based on the token. Additionally/Alternatively, the first token may further include the indication information of the public key of the account of the network function network element or the account public key. The network repository function network element sends a token response message to the network function network element, where the token response message includes the first token.

In a possible implementation, the network function network element may further send at least one of the following information: the information indicating that the token of the network function network element is used for the verification; or the indication information of the public key of the account of the network function network element or the account public key. The network repository function network element may determine, based on the information indicating that the token of the network function network element is used for the verification, that the token for requesting the identifier of the network function network element is a token used for verification of the identifier of the network function network element in the ACME procedure.

In a possible implementation, the first token further includes: information indicating that the first token is used for the verification; and/or the indication information of the public key of the account of the network function network element or the account public key. The information that is in the first token and that indicates that the token of the network function network element is used for the verification may be for determining that the first token is used for the verification of the identifier of the network function network element in the ACME procedure. The indication information of the public key of the account of the network function network element in the first token may be used to prove an account of a public key of the network function network element. The account public key of the network function network element in the first token may be used to prove the account public key of the network function network element.

In a possible implementation, the challenge response message further includes second signature information obtained based on a private key of the account of the network function network element. Correspondingly, the first authentication device may verify the second signature information based on the public key of the account of the network function network element, to further improve security.

In a possible implementation, the challenge response message includes the identifier of the network function network element. Correspondingly, the first authentication device may issue the first certificate based on the identifier of the network function network element. For example, the first authentication device may determine whether the identifier of the network function network element has been successfully verified, and may issue the first certificate if the verification succeeds. In addition, the challenge response message may be a message signed by using the account of the network function network element. The first authentication device may further determine, based on the identifier of the network function network element in the challenge response message, the public key of the account corresponding to the identifier of the network function network element, and verify a signature of the challenge response message. If the verification succeeds, the first authentication device may issue the first certificate.

In a possible implementation, the challenge response message further includes indication information of the public key of the network function network element. The indication information of the public key may be used by the first authentication device to determine the public key of the account of the network function network element. For example, the indication information of the public key may include an account public key identifier or a public key identifier of the account.

According to a second aspect, a communication method is provided. The method may be implemented by a second communication apparatus. The second communication apparatus may be an ACME server, or may be a component in the ACME server. The component in this application may include, for example, at least one of a chip, a chip system, a processor, a transceiver, a processing unit, or a transceiver unit. The ACME server may be a first authentication device.

An example in which an execution body is the first authentication device is used. The method may be implemented by using the following steps.

The first authentication device receives an order request, where the order request includes an identifier of a network function network element, and the order request is for requesting to create an order of issuing a first certificate for the identifier of the network function network element; the first authentication device determines, based on the identifier of the network function network element, a verification manner of verifying the identifier of the network function network element; the first authentication device may further send a challenge message, where the challenge message includes verification manner information, and the verification manner information indicates the verification manner; the first authentication device receives a challenge response message corresponding to the verification manner information, where the challenge response message includes the identifier of the network function network element and/or the first information obtained based on the identifier of the network function network element; the first authentication device may further perform the verification based on the identifier of the network function network element and/or the first information; and the first authentication device may further receive a certificate request message, where the certificate request message is for completing the order, and issuing the first certificate when the verification succeeds.

In a possible implementation, the verification manner is performing the verification based on trust information of the network function network element, and the first information includes the trust information; and the trust information includes at least one of the following: a second certificate of the network function network element, where the second certificate includes the identifier of the network function network element; first signature information obtained by signing the identifier of the network function network element; or a first message authentication code obtained based on a symmetric key and the identifier of the network function network element.

In a possible implementation, the trust information includes the second certificate, and performing the verification based on the first information includes: obtaining a root certificate of the second certificate; and verifying the second certificate based on the root certificate.

In a possible implementation, for example, the first authentication device obtains the root certificate of the second certificate in a manner in which the root certificate of the second certificate may come from a second authentication device or may be preconfigured in the first authentication device.

In a possible implementation, the trust information includes the first signature information, the first signature information is obtained by signing the identifier of the network function network element based on a private key of a second authentication device, and performing the verification based on the first information includes: obtaining a public key of the second authentication device; and verifying the first signature information based on the public key of the second authentication device.

In a possible implementation, for example, the first authentication device obtains the public key of the second authentication device in a manner in which the public key of the second authentication device may come from the second authentication device or may be preconfigured in the first authentication device.

In a possible implementation, the trust information includes the first message authentication code, and performing the verification based on the first information includes: obtaining the symmetric key based on the identifier of the network function network element; obtaining a second message authentication code based on the symmetric key and the identifier of the network function network element; and comparing the first message authentication code with the second message authentication code.

In a possible implementation, for example, the first authentication device obtains the symmetric key in a manner in which the symmetric key may come from a second authentication device or may be preconfigured in the first authentication device.

In a possible implementation, the challenge response message includes the identifier of the network function network element, and the verification manner is performing verification based on first key verification information stored in a network repository function network element.

In a possible implementation, the first key verification information is determined based on a public key of an account of the network function network element; and performing the verification based on the identifier of the network function network element includes: obtaining the first key verification information from the network repository function network element based on the identifier of the network function network element; and verifying the first key verification information based on the public key of the account of the network function network element.

In a possible implementation, the challenge response message further includes information about the network repository function network element, and the method further includes: determining the network repository function network element based on the information about the network repository function network element.

In a possible implementation, verifying the first key verification information based on the public key of the account of the network function network element includes: determining second key verification information based on the public key of the account of the network function network element; and comparing the second key verification information with the first key verification information.

In a possible implementation, the network repository function network element is determined based on the identifier of the network function network element or the information about the network repository function network element; and a request message is sent to the determined network repository function network element, to request the first key verification information. The request message includes the identifier of the network function network element or indication information, and the indication information indicates to obtain the first key verification information. The identifier of the network function network element or the information about the network repository function network element may be carried in the challenge response message.

In a possible implementation, the first information includes the first token. In this case, the verification manner may be verifying the network function network element based on the first token issued by the network repository function network element.

In a possible implementation, the first token is obtained based on a private key of the network repository function network element, and performing the verification based on the first information includes: verifying the first token based on a public key of the network repository function network element.

In a possible implementation, the first token may further include one or more of the following information: information indicating that the first token (or the token of the network function network element) is used for the verification; and/or indication information of the public key of the account of the network function network element or an account public key.

In a possible implementation, the first token may alternatively be pushed to the first authentication device by the network repository function network element after generating the first token. Optionally, the network repository function network element may further push the identifier of the network function network element. Correspondingly, after receiving the challenge response message, the first authentication device may query, based on the identifier of the network function network element carried in the challenge response message, the first token that corresponds to the identifier of the network function network element and that is pushed by the network repository function network element, to obtain the first token. The first authentication device may further perform verification based on the first token. For a verification manner, refer to descriptions in this application. In this implementation, the challenge response message may not carry the first token, but carry the identifier of the network function network element, so that the first authentication device determines the first token.

In addition, the first authentication device may alternatively request the first token from the network repository function network element based on the identifier of the network function network element carried in the challenge response message.

In a possible implementation, the challenge response message further includes second signature information obtained based on a private key of the account of the network function network element; and the method further includes: obtaining a public key of the network function network element; and verifying the second signature information based on the public key of the account of the network function network element.

In a possible implementation, after the verification of the second signature information succeeds and the verification succeeds, the method further includes: determining an association relationship between the identifier of the network function network element and the account.

In a possible implementation, the challenge response message further includes indication information of the public key of the network function network element.

In a possible implementation, the certificate request message includes the identifier of the network function network element.

For beneficial effects of the method shown in the second aspect and the possible implementations thereof, refer to the descriptions of the beneficial effects of the method shown in the first aspect and the corresponding implementations thereof. Details are not described again.

According to a third aspect, a communication method is provided. The method may be implemented by a first communication apparatus. The first communication apparatus may be a network function network element, or may be a component in the network function network element. The component in this application may include, for example, at least one of a chip, a chip system, a processor, a transceiver, a processing unit, or a transceiver unit. The network function network element may serve as an ACME client to request an ACME server to issue a certificate. The ACME server may be a first authentication device.

An example in which an execution body is the network function network element is used. The method may be implemented by using the following steps.

The network function network element sends an account request, where the account request is for requesting to create or update an account of a network function network element, the account request includes an identifier of the network function network element and/or first information obtained based on the identifier of the network function network element, and the identifier of the network function network element and/or the first information are/is for verifying the identifier of the network function network element; the network function network element receives an account response message, where the account response message indicates that creation of the account is completed; and the network function network element obtains, by sending a certificate request message, a first certificate issued for the identifier of the network function network element.

Based on the third aspect, the communication method provided in this application can support and adapt to verification of the identifier of the network function network element in an account phase in an ACME procedure. In addition, the network function network element may further obtain, based on the certificate request, the first certificate issued for the identifier of the network function network element, to implement certificate issuance based on the ACME procedure.

In a possible implementation, the network function network element may send the account request to the first authentication device, and receive an account response message sent by the first authentication device. In addition, the network function network element may send the certificate request to the first authentication device, and obtain a first indication issued by the first authentication device based on the certificate request.

In a possible implementation, the first information may include the trust information. The trust information includes at least one of the following: a second certificate of the network function network element, where the second certificate includes the identifier of the network function network element; first signature information obtained by signing the identifier of the network function network element; or a first message authentication code obtained based on a symmetric key and the identifier of the network function network element.

Refer to the descriptions in the first aspect. The network function network element may obtain the trust information from a second authentication device. In this case, a verification manner may be performing the verification based on trust information of the network function network element, or the verification manner is a trust challenge, an initial trust challenge, a preconfigured trust challenge, an initial trust-based challenge, or the like.

Based on this implementation, authentication and certificate issuance in the ACME procedure may be performed based on initial trust of the identifier of the network function network element. For example, an authentication period of the trust information may be different from that of ACME authentication. Alternatively, it may be understood that the trust information obtained based on the identifier of the network function network element may be used as a prerequisite or guarantee that the authentication of the trust information succeeds in the ACME procedure.

In a possible implementation, the account request includes the identifier of the network function network element. In this case, the verification manner is performing the verification based on first key verification information stored in a network repository function network element, performing an NRF registration challenge, or the like.

In a possible implementation, the network function network element may further send a registration request message to the network repository function network element, where the registration request message includes the identifier of the network function network element and the first key verification information, and the first key verification information is determined based on a public key of an account of the network function network element. The registration request message may be sent before or after the network function network element sends an account request. This is not specifically limited.

Based on this implementation, the first authentication device may obtain the first key verification information from the network repository function network element based on the identifier of the network function network element, and verify the identifier of the network function network element based on the first key verification information.

In a possible implementation, the account request further includes information about the network repository function network element. Therefore, the network function network element may indicate, to the first authentication device by using the information, the network repository function network element that stores the first key verification information, so that the first authentication device can determine to obtain the first key verification information from the network function network element.

In a possible implementation, the first information includes the first token. Correspondingly, the first authentication device may verify the identifier of the network function network element based on the first token carried in the account request.

In a possible implementation, the first token is obtained based on a private key of the network repository function network element. Correspondingly, the first authentication device may verify the first token based on a public key of the network repository function network element, to verify the identifier of the network function network element.

In a possible implementation, the network function network element may further obtain the first token from the network repository function network element.

In a possible implementation, the network function network element may send a token request to the network repository function network element, where the token request is for requesting the first token, and the token request includes the identifier of the network function network element; and the network function network element may further receive the first token from the network repository function network element. Therefore, the network function network element may obtain the first token by sending the token request.

In a possible implementation, the token request further includes information indicating that a token of the network function network element is used by the first authentication device to verify the identifier of the network function network element; and/or the token request further includes indication information of the public key of the account of the network function network element or an account public key. The network repository function sends a token response message to the network function network element, where the token response message includes the first token.

In a possible implementation, the network function network element may further send at least one of the following information: the information indicating that the token of the network function network element is used for the verification; or the indication information of the public key of the account of the network function network element or the account public key. The network repository function network element may determine, based on the information indicating that the token of the network function network element is used for the verification, that the token for requesting the identifier of the network function network element is a token used for verification of the identifier of the network function network element in the ACME procedure.

In a possible implementation, the first token further includes: information indicating that the first token is used for the verification; and/or the indication information of the public key of the account of the network function network element or the account public key. The information that is in the first token and that indicates that the token of the network function network element is used for the verification may be for determining that the first token is used for the verification of the identifier of the network function network element in the ACME procedure. The indication information of the public key of the account of the network function network element in the first token may be used to prove an account of a public key of the network function network element. The account public key of the network function network element in the first token may be used to prove the account public key of the network function network element.

In a possible implementation, the identifier of the network function network element in the account request is carried in an external account binding (external account binding, EAB) identifier field. The EAB identifier field may be used to carry an identifier or information that needs to be related to an account that the account request requests to establish. In an account registration process, the first authentication device may determine, based on the EAB identifier field, that content carried in the field is associated with the account. Based on this implementation, after account registration, the first authentication device may determine that the identifier of the NF carried in the EAB field is associated with the account.

In a possible implementation, the account request further includes second signature information obtained based on a private key of the account of the network function network element. Correspondingly, the first authentication device may verify the second signature information based on the public key of the account of the network function network element, to further improve security.

In a possible implementation, the certificate request includes the identifier of the network function network element. Correspondingly, the first authentication device may issue the first certificate based on the identifier of the network function network element. For example, the first authentication device may determine whether the identifier of the network function network element has been successfully verified, and may issue the first certificate if the verification succeeds. In addition, the certificate request may be a message signed by using the account of the network function network element. The first authentication device may further determine, based on the identifier of the network function network element in the certificate request, the public key of the account corresponding to the identifier of the network function network element, and verify a signature of the certificate request. If the verification succeeds, the first authentication device may issue the first certificate.

In a possible implementation, the account request message and/or the certificate request message further include/includes indication information of the public key of the network function network element. The indication information of the public key may be used by the first authentication device to determine the public key of the account of the network function network element. For example, the indication information of the public key may include an account public key identifier or a public key identifier of the account.

According to a fourth aspect, a communication method is provided. The method may be implemented by a second communication apparatus. The second communication apparatus may be an ACME server, or may be a component in the ACME server. The component in this application may include, for example, at least one of a chip, a chip system, a processor, a transceiver, a processing unit, or a transceiver unit. The ACME server may be a first authentication device.

An example in which an execution body is the first authentication device is used. The method may be implemented by using the following steps.

The first authentication device receives an account request, where the account request is for requesting to create or update an account of a network function network element, and the account request includes an identifier of the network function network element and/or first information obtained based on the identifier of the network function network element; and the first authentication device verifies the identifier of the network function network element based on the identifier of the network function network element and/or the first information. After determining that the verification succeeds, the first authentication device sends an account response message to the network function network element, where the account response message indicates that the account creation is completed. The first authentication device may further receive a certificate request message, and issue a first certificate for the identifier of the network function network element when the verification succeeds.

In a possible implementation, the first information may include the trust information. The trust information includes at least one of the following: a second certificate of the network function network element, where the second certificate includes the identifier of the network function network element; first signature information obtained by signing the identifier of the network function network element; or a first message authentication code obtained based on a symmetric key and the identifier of the network function network element.

In a possible implementation, the trust information includes the second certificate, and performing the verification based on the first information includes: obtaining a root certificate of the second certificate; and verifying the second certificate based on the root certificate.

In a possible implementation, for example, the first authentication device obtains the root certificate of the second certificate in a manner in which the root certificate of the second certificate may come from a second authentication device or may be preconfigured in the first authentication device.

In a possible implementation, the trust information includes the first signature information, the first signature information is obtained by signing the identifier of the network function network element based on a private key of a second authentication device, and performing the verification based on the first information includes: obtaining a public key of the second authentication device; and verifying the first signature information based on the public key of the second authentication device.

In a possible implementation, for example, the first authentication device obtains the public key of the second authentication device in a manner in which the public key of the second authentication device may come from the second authentication device or may be preconfigured in the first authentication device.

In a possible implementation, the trust information includes the first message authentication code, and performing the verification based on the first information includes: obtaining the symmetric key based on the identifier of the network function network element; obtaining a second message authentication code based on the symmetric key and the identifier of the network function network element; and comparing the first message authentication code with the second message authentication code.

In a possible implementation, for example, the first authentication device obtains the symmetric key in a manner in which the symmetric key may come from a second authentication device or may be preconfigured in the first authentication device.

In a possible implementation, the account request includes the identifier of the network function network element. In this case, the verification manner of the identifier of the network function network element is performing the verification based on first key verification information stored in a network repository function network element.

In a possible implementation, the first key verification information is determined based on a public key of an account of the network function network element; and performing the verification based on the identifier of the network function network element includes: obtaining the first key verification information from the network repository function network element based on the identifier of the network function network element; and verifying the first key verification information based on the public key of the account of the network function network element.

In a possible implementation, the account request further includes information about the network repository function network element, and the method further includes: determining the network repository function network element based on the information about the network repository function network element.

In a possible implementation, verifying the first key verification information based on the public key of the account of the network function network element includes: determining second key verification information based on the public key of the account of the network function network element; and comparing the second key verification information with the first key verification information.

In a possible implementation, the network repository function network element is determined based on the identifier of the network function network element or the information about the network repository function network element; and a request message is sent to the determined network repository function network element, to request the first key verification information. The request message includes the identifier of the network function network element or indication information, and the indication information indicates to obtain the first key verification information. The identifier of the network function network element or the information about the network repository function network element may be carried in the account request.

In a possible implementation, the first information includes the first token.

In a possible implementation, the first token is obtained based on a private key of the network repository function network element, and performing the verification based on the first information includes: verifying the first token based on a public key of the network repository function network element.

In a possible implementation, the first token may further include one or more of the following information: information indicating that the first token is used for the verification; and/or indication information of the public key of the account of the network function network element or an account public key.

In a possible implementation, the first token may alternatively be pushed to the first authentication device by the network repository function network element after generating the first token. Optionally, the network repository function network element may further push the identifier of the network function network element. Correspondingly, after receiving the challenge response message, the first authentication device may query, based on the identifier of the network function network element carried in the certificate request, the first token that corresponds to the identifier of the network function graph and that is pushed by the network repository function network element, to obtain the first token. The first authentication device may further perform verification based on the first token. For a verification manner, refer to descriptions in this application. In this implementation, the certificate request may not carry the first token, but carry the identifier of the network function network element, so that the first authentication device determines the first token.

In addition, the first authentication device may alternatively request the first token from the network repository function network element based on the identifier of the network function network element carried in the certificate request.

In a possible implementation, the identifier of the network function network element in the account request is carried in an external account binding identifier field.

In a possible implementation, the account request further includes second signature information obtained based on a private key of the account of the network function network element. The first authentication device may verify the second signature information based on the public key of the account of the network function network element.

In a possible implementation, after the verification of the second signature information succeeds and the verification succeeds, the method further includes: determining an association relationship between the identifier of the network function network element and the account.

In a possible implementation, the certificate request message includes the identifier of the network function network element.

In a possible implementation, the account request message and/or the certificate request message further include/includes indication information of a public key of the network function network element.

For beneficial effects of the fourth aspect and the possible implementations thereof, refer to the descriptions of the beneficial effects of the third aspect and the corresponding implementations thereof. Details are not described again.

According to a fifth aspect, a communication method is provided. The method may be implemented by a first communication apparatus. The first communication apparatus may be a network function network element, or may be a component in the network function network element. The component in this application may include, for example, at least one of a chip, a chip system, a processor, a transceiver, a processing unit, or a transceiver unit. The network function network element may serve as an ACME client to request an ACME server to issue a certificate. The ACME server may be a first authentication device.

An example in which an execution body is the network function network element is used. The method may be implemented by using the following steps.

The network function network element receives an account response message, where the account response message indicates that account creation or update is completed, and the account response message includes account indication information; the network function network element sends a pre-authorization request, where the pre-authorization request includes indication information of an account of the network function network element, the pre-authorization request further includes an identifier of the network function network element and/or first information obtained based on the identifier of the network function network element, and the pre-authorization request is for requesting to pre-authorize the account and requesting to verify the identifier of the network function network element; the network function network element receives a pre-authorization response message, where the pre-authorization response message indicates that pre-authorization of the account is completed and indicates that the verification succeeds; and the network function network element obtains, by sending a certificate request, a first certificate issued for the identifier of the network function network element.

Based on the fifth aspect, the communication method provided in this application can support and adapt to verification of the identifier of the network function network element in a pre-authorization phase in an ACME procedure. In addition, the network function network element may further obtain, based on the certificate request, the first certificate issued for the identifier of the network function network element, to implement certificate issuance based on the ACME procedure.

In a possible implementation, the first information may include the trust information. The trust information includes at least one of the following: a second certificate of the network function network element, where the second certificate includes the identifier of the network function network element; first signature information obtained by signing the identifier of the network function network element; or a first message authentication code obtained based on a symmetric key and the identifier of the network function network element.

Refer to the descriptions in the first aspect. The network function network element may obtain the trust information from a second authentication device. In this case, a verification manner may be performing the verification based on trust information of the network function network element, or the verification manner is a trust challenge, an initial trust challenge, a preconfigured trust challenge, an initial trust-based challenge, or the like.

Based on this implementation, authentication and certificate issuance in the ACME procedure may be performed based on initial trust of the identifier of the network function network element. For example, an authentication period of the trust information may be different from that of ACME authentication. Alternatively, it may be understood that the trust information obtained based on the identifier of the network function network element may be used as a prerequisite or guarantee that the authentication of the trust information succeeds in the ACME procedure.

In a possible implementation, the pre-authorization request includes the identifier of the network function network element. In this case, the verification manner is performing the verification based on first key verification information stored in a network repository function network element, performing an NRF registration challenge, or the like.

In a possible implementation, the network function network element may further send a registration request message to the network repository function network element, where the registration request message includes the identifier of the network function network element and the first key verification information, and the first key verification information is determined based on a public key of an account of the network function network element. The registration request message may be sent before or after the network function network element sends the pre-authorization request. This is not specifically limited.

Based on this implementation, the first authentication device may obtain the first key verification information from the network repository function network element based on the identifier of the network function network element, and verify the identifier of the network function network element based on the first key verification information.

In a possible implementation, the pre-authorization request further includes information about the network repository function network element. Therefore, the network function network element may indicate, to the first authentication device by using the information, the network repository function network element that stores the first key verification information, so that the first authentication device can determine to obtain the first key verification information from the network function network element.

In a possible implementation, the first information includes the first token. Correspondingly, the first authentication device may verify the identifier of the network function network element based on the first token carried in the pre-authorization request.

In a possible implementation, the first token is obtained based on a private key of the network repository function network element. Correspondingly, the first authentication device may verify the first token based on a public key of the network repository function network element, to verify the identifier of the network function network element.

In a possible implementation, the network function network element may further obtain the first token from the network repository function network element.

In a possible implementation, the network function network element may send a token request to the network repository function network element, where the token request is for requesting the first token, and the token request includes the identifier of the network function network element; and the network function network element may further receive the first token from the network repository function network element. Therefore, the network function network element may obtain the first token by sending the token request.

In a possible implementation, the token request further includes information indicating that a token of the network function network element is used by the first authentication device to verify the identifier of the network function network element; and/or the token request further includes indication information of the public key of the account of the network function network element. The network repository function sends a token response message to the network function network element, where the token response message includes the first token.

In a possible implementation, the network function network element may further send at least one of the following information: the information indicating that the token of the network function network element is used for the verification; or the indication information of the public key of the account of the network function network element. The network repository function network element may determine, based on the information indicating that the token of the network function network element is used for the verification, that the token for requesting the identifier of the network function network element is a token used for verification of the identifier of the network function network element in the ACME procedure.

In a possible implementation, the first token further includes: information indicating that the first token is used for the verification; and/or the indication information of the public key of the account of the network function network element. The information that is in the first token and that indicates that the token of the network function network element is used for the verification may be for determining that the first token is used for the verification of the identifier of the network function network element in the ACME procedure. The indication information of the public key of the account of the network function network element in the first token may be used to prove an account of a public key of the network function network element.

In a possible implementation, the pre-authorization request further includes second signature information obtained based on a private key of the account of the network function network element. Correspondingly, the first authentication device may verify the second signature information based on the public key of the account of the network function network element, to further improve security.

In a possible implementation, the certificate request includes the identifier of the network function network element. Correspondingly, the first authentication device may issue the first certificate based on the identifier of the network function network element. For example, the first authentication device may determine whether the identifier of the network function network element has been successfully verified, and may issue the first certificate if the verification succeeds. In addition, the certificate request may be a message signed by using the account of the network function network element. The first authentication device may further determine, based on the identifier of the network function network element in the certificate request, the public key of the account corresponding to the identifier of the network function network element, and verify a signature of the certificate request. If the verification succeeds, the first authentication device may issue the first certificate.

In a possible implementation, the certificate request further includes indication information of the public key of the network function network element. The indication information of the public key may be used by the first authentication device to determine the public key of the account of the network function network element. For example, the indication information of the public key may include an account public key identifier or a public key identifier of the account.

According to a sixth aspect, a communication method is provided. The method may be implemented by a second communication apparatus. The second communication apparatus may be an ACME server, or may be a component in the ACME server. The component in this application may include, for example, at least one of a chip, a chip system, a processor, a transceiver, a processing unit, or a transceiver unit. The ACME server may be a first authentication device.

An example in which an execution body is the first authentication device is used. The method may be implemented by using the following steps.

The first authentication device sends an account response message, where the account response message indicates that account creation or update is completed, and the account response message includes account indication information; the first authentication device receives a pre-authorization request, where the pre-authorization request includes indication information of an account of a network function network element, the pre-authorization request further includes an identifier of the network function network element and/or first information obtained based on the identifier of the network function network element, and the pre-authorization request is for requesting to pre-authorize the account and is for requesting to verify the identifier of the network function network element; the first authentication device verifies the identifier of the network function network element based on the identifier of the network function network element and/or the first information; and the first authentication device sends a pre-authorization response message when determining that the verification succeeds, where the pre-authorization response message indicates that the pre-authorization of the account is completed; and/or the first authentication device may further receive a certificate request message, and issue a first certificate for the identifier of the network function network element when determining that the verification succeeds. Alternatively, the first authentication device may not send the pre-authorization response message on a premise that the identifier of the network function network element is successfully verified.

In a possible implementation, the first information may include the trust information. The trust information includes at least one of the following: a second certificate of the network function network element, where the second certificate includes the identifier of the network function network element; first signature information obtained by signing the identifier of the network function network element; or a first message authentication code obtained based on a symmetric key and the identifier of the network function network element.

In a possible implementation, the trust information includes the second certificate, and performing the verification based on the first information includes: obtaining a root certificate of the second certificate; and verifying the second certificate based on the root certificate.

In a possible implementation, for example, the first authentication device obtains the root certificate of the second certificate in a manner in which the root certificate of the second certificate may come from a second authentication device or may be preconfigured in the first authentication device.

In a possible implementation, the trust information includes the first signature information, the first signature information is obtained by signing the identifier of the network function network element based on a private key of a second authentication device, and performing the verification based on the first information includes: obtaining a public key of the second authentication device; and verifying the first signature information based on the public key of the second authentication device.

In a possible implementation, for example, the first authentication device obtains the public key of the second authentication device in a manner in which the public key of the second authentication device may come from the second authentication device or may be preconfigured in the first authentication device.

In a possible implementation, the trust information includes the first message authentication code, and performing the verification based on the first information includes: obtaining the symmetric key based on the identifier of the network function network element; obtaining a second message authentication code based on the symmetric key and the identifier of the network function network element; and comparing the first message authentication code with the second message authentication code.

In a possible implementation, for example, the first authentication device obtains the symmetric key in a manner in which the symmetric key may come from a second authentication device or may be preconfigured in the first authentication device.

In a possible implementation, the pre-authorization request includes the identifier of the network function network element. In this case, the verification manner of the identifier of the network function network element is performing the verification based on first key verification information stored in a network repository function network element.

In a possible implementation, the first key verification information is determined based on a public key of an account of the network function network element; and performing the verification based on the identifier of the network function network element includes: obtaining the first key verification information from the network repository function network element based on the identifier of the network function network element; and verifying the first key verification information based on the public key of the account of the network function network element.

In a possible implementation, the pre-authorization request further includes information about the network repository function network element, and the method further includes: determining the network repository function network element based on the information about the network repository function network element.

In a possible implementation, verifying the first key verification information based on the public key of the account of the network function network element includes: determining second key verification information based on the public key of the account of the network function network element; and comparing the second key verification information with the first key verification information.

In a possible implementation, the network repository function network element is determined based on the identifier of the network function network element or the information about the network repository function network element; and a request message is sent to the determined network repository function network element, to request the first key verification information. The request message includes the identifier of the network function network element or indication information, and the indication information indicates to obtain the first key verification information. The identifier of the network function network element or the information about the network repository function network element may be carried in the pre-authorization request.

In a possible implementation, the first information includes the first token.

In a possible implementation, the first token is obtained based on a private key of the network repository function network element, and performing the verification based on the first information includes: verifying the first token based on a public key of the network repository function network element.

In a possible implementation, the first token may further include one or more of the following information: information indicating that the first token is used for the verification; and/or indication information of a public key of an account of the network function network element.

In a possible implementation, the first token may alternatively be pushed to the first authentication device by the network repository function network element after generating the first token. Optionally, the network repository function network element may further push the identifier of the network function network element. Correspondingly, after receiving the challenge response message, the first authentication device may query, based on the identifier of the network function network element carried in the certificate request, the first token that corresponds to the identifier of the network function graph and that is pushed by the network repository function network element, to obtain the first token. The first authentication device may further perform verification based on the first token. For a verification manner, refer to descriptions in this application. In this implementation, the certificate request may not carry the first token, but carry the identifier of the network function network element, so that the first authentication device determines the first token.

In addition, the first authentication device may alternatively request the first token from the network repository function network element based on the identifier of the network function network element carried in the certificate request.

In a possible implementation, the pre-authorization request further includes second signature information obtained based on a private key of the account of the network function network element. The first authentication device may verify the second signature information based on the public key of the account of the network function network element.

In a possible implementation, after the verification of the second signature information succeeds and the verification succeeds, the method further includes: determining an association relationship between the identifier of the network function network element and the account.

In a possible implementation, the certificate request includes the identifier of the network function network element.

In a possible implementation, the certificate request further includes indication information of a public key of the network function network element.

For beneficial effects of the sixth aspect and the possible implementations thereof, refer to the descriptions of the beneficial effects of the third aspect and the corresponding implementations thereof. Details are not described again.

According to a seventh aspect, a communication method is provided. The method may be implemented by a first communication apparatus. The first communication apparatus may be a network function network element, or may be a component in the network function network element. The component in this application may include, for example, at least one of a chip, a chip system, a processor, a transceiver, a processing unit, or a transceiver unit. The network function network element may serve as an ACME client to request an ACME server to issue a certificate. The ACME server may be a first authentication device.

An example in which an execution body is the network function network element is used. The method may be implemented by using the following steps.

The network function network element sends a challenge response message, where the challenge response message indicates a first authentication device to perform first verification on a domain name or an IP address of a network function network element; the network function network element sends a certificate request, where the certificate request includes an identifier of the network function network element and/or first information obtained based on the identifier of the network function network element, the certificate request is for requesting a first certificate corresponding to the identifier of the network function network element, and the identifier of the network function network element and/or the first information are/is used by the first authentication device to perform second verification on the identifier of the network function network element; and the network function network element obtains the first certificate, where the first certificate is issued by the first authentication device after determining that the second verification succeeds.

The first verification may be verification performed based on the domain name or the IP address of the network function network element. The second verification may be verification performed based on the identifier of the network function network element and/or the first information. Based on the method shown in the seventh aspect, the first certificate may be issued after the first verification and the second verification are performed, to support and adapt to verification of the identifier of the network function network element in an account phase in an ACME procedure. In addition, the network function network element may further obtain, based on the certificate request, the first certificate issued for the identifier of the network function network element, to implement certificate issuance based on the ACME procedure.

In a possible implementation, the first information may include the trust information. The trust information includes at least one of the following: a second certificate of the network function network element, where the second certificate includes the identifier of the network function network element; first signature information obtained by signing the identifier of the network function network element; or a first message authentication code obtained based on a symmetric key and the identifier of the network function network element.

Refer to the descriptions in the first aspect. The network function network element may obtain the trust information from a second authentication device. In this case, a verification manner of the second verification may be performing the verification based on trust information of the network function network element, or the verification manner is a trust challenge, an initial trust challenge, a preconfigured trust challenge, an initial trust-based challenge, or the like.

Based on this implementation, the second verification may be performed based on initial trust of the identifier of the network function network element. For example, an authentication period of the trust information may be different from that of ACME authentication. Alternatively, it may be understood that the trust information obtained based on the identifier of the network function network element may be used as a prerequisite or guarantee that the authentication of the trust information succeeds in the ACME procedure.

In a possible implementation, the certificate request includes the identifier of the network function network element. In this case, the verification manner is performing the verification based on first key verification information stored in a network repository function network element, performing an NRF registration challenge, or the like.

In a possible implementation, the network function network element may further send a registration request message to the network repository function network element, where the registration request message includes the identifier of the network function network element and the first key verification information, and the first key verification information is determined based on a public key of an account of the network function network element. The registration request message may be sent before or after the network function network element sends the certificate request. This is not specifically limited.

Based on this implementation, the first authentication device may obtain the first key verification information from the network repository function network element based on the identifier of the network function network element, and verify the identifier of the network function network element based on the first key verification information.

In a possible implementation, the certificate request further includes information about the network repository function network element. Therefore, the network function network element may indicate, to the first authentication device by using the information, the network repository function network element that stores the first key verification information, so that the first authentication device can determine to obtain the first key verification information from the network function network element.

In a possible implementation, the first information includes the first token. Correspondingly, the first authentication device may verify the identifier of the network function network element based on the first token carried in the certificate request.

In a possible implementation, the first token is obtained based on a private key of the network repository function network element. Correspondingly, the first authentication device may verify the first token based on a public key of the network repository function network element, to verify the identifier of the network function network element.

In a possible implementation, the network function network element may further obtain the first token from the network repository function network element.

In a possible implementation, the network function network element may send a token request to the network repository function network element, where the token request is for requesting the first token, and the token request includes the identifier of the network function network element; and the network function network element may further receive the first token from the network repository function network element. Therefore, the network function network element may obtain the first token by sending the token request.

In a possible implementation, the token request further includes information indicating that a token of the network function network element is used by the first authentication device to verify the identifier of the network function network element; and/or the token request further includes indication information of the public key of the account of the network function network element or an account public key. The first token further includes information indicating that a token of the network function network element is used by the first authentication device to verify the identifier of the network function network element; and/or the indication information of the public key of the account of the network function network element or the account public key. The network repository function sends a token response message to the network function network element, where the token response message includes the first token.

In a possible implementation, the network function network element may further send at least one of the following information: the information indicating that the token of the network function network element is used for the verification; or the indication information of the public key of the account of the network function network element or the account public key. The network repository function network element may determine, based on the information indicating that the token of the network function network element is used for the verification, that the token for requesting the identifier of the network function network element is a token used for verification of the identifier of the network function network element in the ACME procedure.

In a possible implementation, the first token further includes: information indicating that the first token is used for the verification; and/or the indication information of the public key of the account of the network function network element or the account public key. The information that is in the first token and that indicates that the token of the network function network element is used for the verification may be for determining that the first token is used for the verification of the identifier of the network function network element in the ACME procedure. The indication information of the public key of the account of the network function network element in the first token may be used to prove an account of a public key of the network function network element. The account public key of the network function network element in the first token may be used to prove the account public key of the network function network element.

In a possible implementation, the certificate request further includes second signature information obtained based on a private key of the account of the network function network element. Correspondingly, the first authentication device may verify the second signature information based on the public key of the account of the network function network element, to further improve security.

In a possible implementation, the certificate request further includes the domain name or the IP address of the network function network element, and the domain name or the IP address of the network function network element is for performing third verification on the identifier of the network function network element. When the third verification succeeds, the first certificate may be issued. Therefore, authentication security is further improved. The first authentication device may store a first association relationship after determining that the first verification succeeds. The first association relationship may include an association relationship between account information of the NF and the domain name (or the IP address) of the NF. In addition, after the first authentication device determines that the second verification succeeds, the first authentication device may store a second association relationship. The second association relationship may include an association relationship between the identifier of the NF and an account that is for sending the certificate request.

In an example of performing the third verification, the first authentication device may determine, based on the second association relationship, an account (referred to as a first account) associated with the identifier of the NF, where the account may be an account for sending the certificate request. In addition, the first authentication device determines, based on the domain name or the IP address of the NF in the certificate request message and the first association relationship, an account (referred to as a second account) associated with the domain name or the IP address of the NF. If the first account is the same as the second account (that is, public keys of the accounts or public key identifiers of the accounts are the same), it may be determined that there is an association relationship, namely, a third association relationship, between an identifier of an NF and a domain name or an IP address of the NF that are associated with a same account. The third association relationship may be an association relationship between the domain name or the IP address of the NF and the identifier of the NF. The first authentication device may perform the third verification based on the third association relationship, that is, compare the domain name or the IP address of the NF and the identifier of the NF in the third association relationship with the domain name or the IP address of the NF and the identifier of the NF in the certificate request message. If they are the same, it may be determined that the third verification succeeds; otherwise, if they are different, it may be determined that the third verification fails.

According to an eighth aspect, a communication method is provided. The method may be implemented by a second communication apparatus. The second communication apparatus may be an ACME server, or may be a component in the ACME server. The component in this application may include, for example, at least one of a chip, a chip system, a processor, a transceiver, a processing unit, or a transceiver unit. The ACME server may be a first authentication device.

An example in which an execution body is the first authentication device is used. The method may be implemented by using the following steps: The first authentication device performs first verification on a domain name or an IP address of a network function network element; the first authentication device receives a certificate request, where the certificate request includes an identifier of the network function network element and/or first information obtained based on the identifier of the network function network element, and the certificate request is for requesting a first certificate corresponding to the identifier of the network function network element; after determining that the first verification succeeds, the first authentication device performs second verification on the identifier of the network function network element based on the identifier of the network function network element and/or the first information; and the first authentication device issues the first certificate for the identifier of the network function network element after determining that the second verification succeeds.

In a possible implementation, the first information may include the trust information. The trust information includes at least one of the following: a second certificate of the network function network element, where the second certificate includes the identifier of the network function network element; first signature information obtained by signing the identifier of the network function network element; or a first message authentication code obtained based on a symmetric key and the identifier of the network function network element.

In a possible implementation, the trust information includes the second certificate, and performing the second verification based on the first information includes: obtaining a root certificate of the second certificate; and verifying the second certificate based on the root certificate.

In a possible implementation, for example, the first authentication device obtains the root certificate of the second certificate in a manner in which the root certificate of the second certificate may come from a second authentication device or may be preconfigured in the first authentication device.

In a possible implementation, the trust information includes the first signature information, the first signature information is obtained by signing the identifier of the network function network element based on a private key of a second authentication device, and performing the second verification based on the first information includes: obtaining a public key of the second authentication device; and verifying the first signature information based on the public key of the second authentication device.

In a possible implementation, for example, the first authentication device obtains the public key of the second authentication device in a manner in which the public key of the second authentication device may come from the second authentication device or may be preconfigured in the first authentication device.

In a possible implementation, the trust information includes the first message authentication code, and performing the second verification based on the first information includes: obtaining the symmetric key based on the identifier of the network function network element; obtaining a second message authentication code based on the symmetric key and the identifier of the network function network element; and comparing the first message authentication code with the second message authentication code.

In a possible implementation, for example, the first authentication device obtains the symmetric key in a manner in which the symmetric key may come from a second authentication device or may be preconfigured in the first authentication device.

In a possible implementation, the certificate request includes the identifier of the network function network element. In this case, a manner of the second verification is performing the verification based on first key verification information stored in a network repository function network element.

In a possible implementation, the first key verification information is determined based on a public key of an account of the network function network element; and performing the second verification based on the identifier of the network function network element includes: obtaining the first key verification information from the network repository function network element based on the identifier of the network function network element; and verifying the first key verification information based on the public key of the account of the network function network element.

In a possible implementation, the certificate request further includes information about the network repository function network element, and the method further includes: determining the network repository function network element based on the information about the network repository function network element.

In a possible implementation, verifying the first key verification information based on the public key of the account of the network function network element includes: determining second key verification information based on the public key of the account of the network function network element; and comparing the second key verification information with the first key verification information.

In a possible implementation, the network repository function network element is determined based on the identifier of the network function network element or the information about the network repository function network element; and a request message is sent to the determined network repository function network element, to request the first key verification information. The request message includes the identifier of the network function network element or indication information, and the indication information indicates to obtain the first key verification information. The identifier of the network function network element or the information about the network repository function network element may be carried in the certificate request.

In a possible implementation, the first information includes the first token. In this case, a verification manner of the second verification is performing verification based on the token issued by the network repository function network element.

In a possible implementation, the first token is obtained based on a private key of the network repository function network element, and performing the second verification based on the first information includes: verifying the first token based on a public key of the network repository function network element.

In a possible implementation, the first token may further include one or more of the following information: information indicating that the first token is used for the verification; and/or indication information of a public key of an account of the network function network element.

In a possible implementation, the first token may alternatively be pushed to the first authentication device by the network repository function network element after generating the first token. Optionally, the network repository function network element may further push the identifier of the network function network element. Correspondingly, after receiving the challenge response message, the first authentication device may query, based on the identifier of the network function network element carried in the certificate request, the first token that corresponds to the identifier of the network function graph and that is pushed by the network repository function network element, to obtain the first token. The first authentication device may further perform verification based on the first token. For a verification manner, refer to descriptions in this application. In this implementation, the certificate request may not carry the first token, but carry the identifier of the network function network element, so that the first authentication device determines the first token.

In addition, the first authentication device may alternatively request the first token from the network repository function network element based on the identifier of the network function network element carried in the certificate request.

In a possible implementation, the certificate request includes the domain name or the IP address of the network function network element, and before issuing, by a first authentication device, the first certificate, the method further includes: The first authentication device performs third verification on the identifier of the network function network element based on the domain name or the IP address of the network function network element.

After determining that the first verification succeeds, the first authentication device may store a first association relationship between the domain name or the IP address of the network function network element and the account of the network function network element; and after determining that the second verification succeeds, store a second association relationship between the identifier of the network function network element and the account of the network function network element. The method further includes: The first authentication device determines, based on the second association relationship, a first account corresponding to the identifier of the network function network element in the certificate request; and the first authentication device determines the domain name (or the IP address) of the network function network element in the certificate request based on the first association relationship, determines a corresponding second account based on the domain name or the IP address, and determines that the first account is the same as the second account. In this case, the first authentication device may determine that there is a third association relationship between an identifier of the NF and a domain name (or an IP address) of the NF that are associated with a same account. That the first authentication device performs the third verification on the identifier of the network function network element based on the domain name or the IP address of the network function network element includes: comparing the domain name or the IP address of the NF and the identifier of the NF in the third association relationship with the domain name or the IP address of the NF and the identifier of the NF in the certificate request message. If they are the same, it may be determined that the third verification succeeds; otherwise, if they are different, it may be determined that the third verification fails.

For beneficial effects of the eighth aspect and the possible implementations thereof, refer to the descriptions of the beneficial effects of the third aspect and the corresponding implementations thereof. Details are not described again.

According to a ninth aspect, a communication method is provided. The method may be implemented by a third communication apparatus. The third communication apparatus may be a network repository function network element, may be a component in the network repository function network element, or may be another network element, device, or component that supports network element registration. The component in this application may include, for example, at least one of a chip, a chip system, a processor, a transceiver, a processing unit, or a transceiver unit.

An example in which an execution body is the network repository function network element is used. The method may be implemented by using the following steps.

In a possible implementation, the network repository function network element may further receive a registration request message of a network function network element, where the registration request message includes an identifier of the network function network element and first key verification information; and the network repository function network element sends the first key verification information to a first authentication device. The network repository function network element may further determine, based on the identifier of the network function network element, to send the first key verification information to the first authentication device.

In a possible implementation, the network repository function network element may receive a request message sent by the first authentication device, where the request message is for requesting the first key verification information. The request message includes the identifier of the network function network element, and the identifier of the network function network element is for determining the first key verification information of the network function network element. The indication information indicates to request to obtain key verification information for verifying the identifier of the network function network element, that is, the first key verification information.

In a possible implementation, that the network repository function network element sends the first key verification information to the first authentication device includes: The network repository function network element obtains the first key verification information based on the identifier of the network function network element, and pushes the first key information to the first authentication device when a condition for pushing the key verification information is met. For example, the condition for pushing the key verification information includes: the first authentication device subscribes to a push service of the verification information, the registration request message of the network function network element includes the identifier of the network function network element and indication information indicating to push, pushing is determined to be performed based on a local configuration, or the key verification information is pushed to the first authentication device by default after the key verification information is generated.

According to a tenth aspect, a communication method is provided. The method may be implemented by a third communication apparatus. The third communication apparatus may be a network repository function network element, may be a component in the network repository function network element, or may be another network element, device, or component that supports network element registration. The component in this application may include, for example, at least one of a chip, a chip system, a processor, a transceiver, a processing unit, or a transceiver unit.

An example in which an execution body is the network repository function network element is used. The method may be implemented by using the following steps.

The network repository function network element may push a first token to a first authentication device after generating the first token based on a token request from a network function network element. For the first token, refer to the descriptions in the first aspect.

The network repository function network element may push the first token to the first authentication device when a token push condition is met. For example, the token push condition includes: (a) The first authentication device subscribes to a token push service of the network function network element from a token provider. (b) The network repository function network element is configured to push, to the first authentication device, a token (including but not limited to the first token) that is for verifying the identifier of the network function network element and that is of the network function network element after the token is generated. (c) The token request includes indication information, and the indication information indicates the network repository function network element to push the first token to the first authentication device. Correspondingly, the first authentication device may further verify the identifier of the network function network element based on the first token. For a verification manner, refer to the descriptions in this application.

In a possible implementation, the network repository function network element may further obtain at least one of the following information from the network function network element: the information indicating that the token of the network function network element is used for the verification; or the indication information of the public key of the account of the network function network element or the account public key.

In a possible implementation, the first token generated by the network repository function network element may include at least one of the following information: the information indicating that the token of the network function network element is used for the verification; or the indication information of the public key of the account of the network function network element or the account public key.

In a possible implementation, the network repository function network element may further push the identifier of the network function network element. Correspondingly, after receiving a challenge response message, an account request, a pre-authorization request, or a certificate request that carries the identifier of the network function network element, the first authentication device may query, based on the identifier of the network function network element carried in the challenge response message, the account request, the pre-authorization request, or the certificate request, the first token that corresponds to the identifier of the network function diagram and that is pushed by the network repository function network element, to obtain the first token. In this implementation, the challenge response message, the account request, the pre-authorization request, or the certificate request may not carry the first token, but carry the identifier of the network function network element, so that the first authentication device determines the first token.

In addition, the first authentication device may alternatively request the first token from the network repository function network element based on the identifier of the network function network element carried in the challenge response message, the account request, the pre-authorization request, or the certificate request.

According to an eleventh aspect, a communication apparatus is provided. The apparatus may implement the method according to any one of the first aspect to the tenth aspect or the possible implementations thereof. The apparatus has a function of the first communication apparatus, the second communication apparatus, or the third communication apparatus described above. The apparatus is, for example, a terminal device, a functional module in the terminal device, a network device, or a functional module in the network device.

In an optional implementation, the apparatus may include modules that are in one-to-one correspondence with the methods/operations/steps/actions according to any one of the first aspect to the tenth aspect and the possible implementations thereof. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for the functional modules.

For example, when the apparatus is configured to perform the method according to any one of the first aspect to the tenth aspect, the apparatus may include the communication unit and the processing unit.

According to a twelfth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to any one of the first aspect to the tenth aspect or the possible implementations thereof.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a thirteenth aspect, a computer-readable storage medium is provided. The computer-readable storage medium is configured to store a computer program or instructions. When the computer program or the instructions are run, the method according to any one of the first aspect to the tenth aspect and the possible implementations thereof is implemented.

According to a fourteenth aspect, a computer program product including instructions is provided. When the computer program product is run on a computer, the method according to any one of the first aspect to the tenth aspect and the possible implementations thereof is implemented.

According to a fifteenth aspect, an embodiment of this application further provides a communication apparatus, to perform the method according to any one of the first aspect to the tenth aspect and the possible implementations thereof.

According to a sixteenth aspect, a chip system is provided. The chip system includes a logic circuit (which may alternatively be understood as that the chip system includes a processor and the processor may include the logic circuit, or the like), and may further include an input/output interface. The input/output interface may be configured to input a message, or may be configured to output a message. The input/output interface may be a same interface. To be specific, the same interface can implement both a sending function and a receiving function. Alternatively, the input/output interface includes an input interface and an output interface. The input interface is configured to implement a receiving function, in other words, configured to receive a message. The output interface is configured to implement a sending function, in other words, configured to send a message. The logic circuit may be configured to perform an operation other than the sending and receiving functions in the method according to any one of the first aspect to the tenth aspect and the possible implementations thereof. The logic circuit may be further configured to transmit a message to the input/output interface, or receive, from the input/output interface, a message from another communication apparatus. The chip system may be configured to implement the method according to any one of the first aspect to the tenth aspect or the possible implementations thereof. The chip system may include a chip, or may include a chip and another discrete component.

Optionally, the chip system may further include a memory, and the memory may be configured to store instructions. The logic circuit may invoke the instructions stored in the memory to implement a corresponding function.

According to a seventeenth aspect, a communication method is provided. The communication method may include the method implemented by the first communication apparatus according to any one of the first aspect and the possible implementations thereof, and the method implemented by the second communication apparatus according to any one of the second aspect and the possible implementations thereof. The communication method may include the method implemented by the first communication apparatus according to any one of the third aspect and the possible implementation thereof, and the method implemented by the second communication apparatus according to any one of the fourth aspect and the possible implementations thereof. The communication method may include the method implemented by the first communication apparatus according to any one of the fifth aspect and the possible implementations thereof, and the method implemented by the second communication apparatus according to any one of the sixth aspect and the possible implementations thereof. The communication method may include the method implemented by the first communication apparatus according to any one of the seventh aspect and the possible implementations thereof, and the method implemented by the second communication apparatus according to any one of the eighth aspect and the possible implementations thereof. Any one of the foregoing communication methods may further include the method implemented by the third communication apparatus according to any one of the ninth aspect and the possible implementations thereof, and/or the method implemented by the third communication apparatus according to any one of the tenth aspect and the possible implementations thereof.

According to an eighteenth aspect, a communication system is provided. The communication system may include a first communication apparatus and a second communication apparatus. The first communication apparatus may be configured to implement the method according to any one of the first aspect or the possible implementations thereof, and the second communication apparatus may be configured to implement the method according to any one of the second aspect or the possible implementations thereof. Alternatively, the first communication apparatus may be configured to implement the method according to any one of the third aspect or the possible implementations thereof, and the second communication apparatus may be configured to implement the method according to any one of the fourth aspect or the possible implementations thereof. Alternatively, the first communication apparatus may be configured to implement the method according to any one of the fifth aspect and the possible implementations thereof, and the second communication apparatus may be configured to implement the method according to any one of the sixth aspect and the possible implementations thereof. Alternatively, the first communication apparatus may be configured to implement the method according to any one of the seventh aspect and the possible implementations thereof, and the second communication apparatus may be configured to implement the method according to any one of the eighth aspect and the possible implementations thereof. The communication system may further include a third communication apparatus, configured to implement the method according to any one of the ninth aspect and/or the tenth aspect and the possible implementations thereof.

For technical effects brought by the eleventh aspect to the eighteenth aspect, refer to the descriptions of the beneficial effects of the corresponding solutions in the first aspect to the tenth aspect. Details are not described herein again.

### BRIEF DESCRIPTION OF DRAWINGS

FIG. 1 is a diagram of a 5G network service-based architecture;
FIG. 2 is a schematic flowchart of a communication method according to an embodiment of this application;
FIG. 3 is a schematic flowchart of another communication method according to an embodiment of this application;
FIG. 4A and FIG. 4B are a schematic flowchart of another communication method according to an embodiment of this application;
FIG. 5A and FIG. 5B are a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11A and FIG. 11B are a schematic flowchart of another communication method according to an embodiment of this application;
FIG. 12 is a schematic flowchart of another communication method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

Embodiments of this application provide a communication method and apparatus. The method and the apparatus are based on a same inventive concept. Because the method and the apparatus have a similar problem-resolving principle, for implementations of the apparatus and the method, refer to each other, and no repeated description is provided.

To enhance flexibility and agility of network deployment, an NFV technology is used in a core network of a mobile network to divide functions of a network element into different network functions, and the network functions are deployed on a network platform in a virtualized form, to implement fast deployment of the network functions. To simplify communication and access control between network elements, a service-based architecture is used in a 5G network. Different network elements in the service-based architecture can interact with each other over a service based interface (service based interface, SBI). For example, based on a service based interface, a service request may be sent and a service may be obtained between network elements over hypertext transfer protocol secure (hyper text transfer protocol secure, HTTPS).

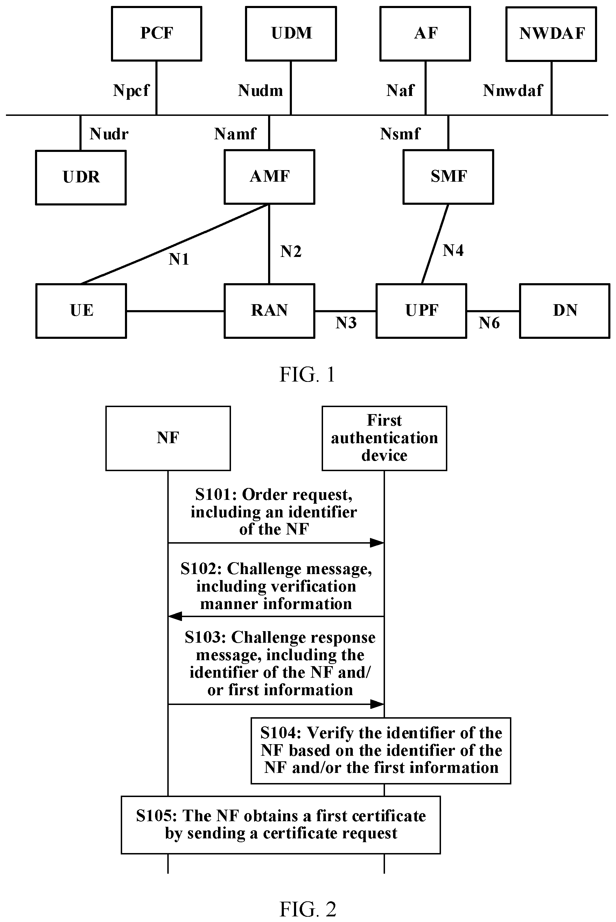

FIG. 1 is a diagram of a network architecture based on a service-based architecture. The service-based architecture may include service-based architectures in 5G and a future mobile communication system. The network architecture shown in FIG. 1 may include a terminal device, an access network device, and a core network device. The terminal device accesses a data network (data network, DN) via the access network device and the core network device. The core network device includes a plurality of NF network elements. For example, the NF network elements in the service-based network architecture include a part or all of the following: a unified data management (unified data management, UDM) network element, a unified data repository (unified data repository, UDR) network element, a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a network data analytics function (network data analytics function, NWDAF) network element, an NRF (not shown in the figure), and a location management function (location management function, LMF) network element (not shown in the figure). For descriptions and function descriptions of the foregoing network elements, refer to a related 5G protocol. Details are not described herein.

The access network device may be a radio access network (radio access network, RAN) device, for example, a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a future mobile communication system such as the 6th generation (the 6th generation, 6G), an open radio access network (open RAN, O-RAN, or ORAN) mobile communication system, or a cloud radio access network (cloud radio access network, CRAN) mobile communication system, a base station in a future mobile communication system, or an access node in a wireless fidelity (wireless fidelity, Wi-Fi) system, or may be a module or a unit that completes some functions of the base station, for example, may be a central unit (central unit, CU) or a distributed unit (distributed unit, DU). The access network device may be a macro base station, may be a micro base station or an indoor base station, or may be a relay node, a donor node, or the like. Alternatively, the access network device may be an open radio access network (open RAN, O-RAN or ORAN), a cloud radio access network (cloud radio access network, CRAN), or a wireless fidelity (wireless fidelity, Wi-Fi) system. Alternatively, the access network device may be a communication system integrating the foregoing two or more systems. A specific technology and a specific device form used by the radio access network device are not limited in embodiments of this application.

The terminal device may be user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart home, smart office, smart wear, smart transportation, and smart city. The terminal device may be a mobile phone, a tablet computer, a computer with a wireless transceiver function, a wearable device, a vehicle, an urban air transportation vehicle (for example, an uncrewed aerial vehicle or a helicopter), a ship, a robot, a robotic arm, a smart home device, or the like.

The access network device and the terminal device may be at fixed locations, or may be movable. The access network device and the terminal device may be deployed terrestrially, including indoors or outdoors, or may be handheld or vehicle-mounted; or may be deployed on a water surface; or may be deployed on a plane, a balloon, or a man-made satellite in the sky. Application scenarios of the access network device and the terminal device are not limited in embodiments of this application.

It may be understood that the foregoing network elements and the communication devices are examples of an implementation of the 5G network in the service-based architecture. This application does not exclude that a network element or a device having a function of the foregoing network element has another name or another form in a 6G or updated wireless communication system.

In FIG. 1, Nudr, Npcf, Namf, Nudm, Nsmf, Naf, and Nnwdaf are service-based interfaces respectively provided by the UDR, the PCF, the AMF, the UDM, the SMF, the AF, and the NWDAF for invoking corresponding service-based operations. N1, N2, N3, N4, and N6 are interface sequence numbers. Meanings of the interface sequence numbers are as follows:

(1) N1 is an interface between the AMF network element and the terminal device, and may be configured to transfer non-access stratum (non-access stratum, NAS) signaling (for example, including a QoS rule from the AMF network element) and the like to the terminal device.

(2) N2 is an interface between the AMF network element and the access network device, and may be configured to transfer radio bearer control information and the like from a core network side to the access network device.

(3) N3 is an interface between the access network device and the UPF network element, and is mainly configured to transfer uplink and downlink user plane data between the access network device and the UPF network element.

(4) N4 is an interface between the SMF network element and the UPF network element, and may be configured to transfer information between a control plane and a user plane, including delivering a forwarding rule, a QoS rule, a traffic statistics rule, and the like from the control plane to the user plane, and reporting user plane information.

(5) N6 is an interface between the UPF network element and the DN, and is configured to transfer uplink and downlink user data flows between the UPF network element and the DN.

It can be understood that the foregoing network elements or functions may be network elements in a hardware device, software functions running on dedicated hardware, or virtualized functions instantiated on a platform (for example, a cloud platform). In a possible implementation method, the foregoing network elements or functions may be implemented by one device, or may be jointly implemented by a plurality of devices, or may be implemented by one functional module in one device. This is not specifically limited in embodiments of this application.

In addition, the foregoing NF network elements may also be referred to as NFs for short. For example, the AMF network element may be referred to as an AMF for short.

It may be understood that FIG. 1 is an example of a 5G service-based network architecture. This application may be further applied to another service-based architecture in a 5G or future mobile network (for example, 6G) other than FIG. 1, to issue a certificate (or a digital certificate) of an NF network element in the service-based network architecture.

In current 5G, to ensure security of NF interaction, all NFs need to be authenticated and/or authorized, for example, NF authentication or authorization is performed by an OAM, an NRF, or the like. In the 5G system, NF authentication and authorization may be performed based on a certificate (or referred to as a public key certificate) of the NF, the transport layer security (transport layer security, TLS) protocol, or the hypertext transfer security protocol.

The certificate of the NF is issued by a CA. The CA may be a local CA that belongs to a 5G network operator, or may be a third-party CA that does not belong to an operator. The certificate of the NF usually includes the following information: a certificate serial number (serial number) and a name of a certificate subject (for example, the NF). The name of the certificate subject is, for example, a subject name (SubjectName), a subject alias (SubjectAltName), subject public key information, a certificate validity period, a certificate issuer (issuer, for example, the CA), or a signature. The subject public key information includes, for example, a public key of the certificate subject, a public key cryptographic algorithm identifier, and a related key parameter. The signature may be a digital signature of the certificate by the CA using its private key.

The certificate of the NF is usually configured in software or hardware of the NF by an operator via the OAM. Conventional certificate management (including configuration, update, and revocation) of an NF or a network element is manually configured by an administrator. This certificate management method is very labor-consuming and time-consuming. More importantly, manual management is not only prone to errors, but also increases security risks of internal personnel attacks, thereby greatly increasing security risks such as security accidents and attacks on the entire system. Therefore, in a current 5G network with a service-based architecture, certificate management of an NF network element needs to be improved.

ACME is a certificate management challenge solution developed by the internet engineering task force (internet engineering task force, IETF). An ACME identifier (identifier, ID) of a client may be used by a CA or an ACME server to verify that the client has control over the ACME identifier, and issue a certificate including the ACME identifier to the client. However, a current ACME procedure does not adapt to the service-based architecture of the 5G network.

In the current ACME procedure, the ACME identifier is a domain name or an IP address of a network element, and the subject of the issued certificate is also a domain name or an IP address by default. There is no ACME certificate management mechanism based on a unique identifier of an NF in the 5G system. Therefore, there is no automatic authentication (that is, the ACME server automatically verifies that the NF has control over the unique identifier of the NF) and automatic certificate management for the unique identifier of the NF. That is, the current ACME procedure cannot adapt to the 5G service-based architecture. The unique identifier of the NF network element may be referred to as an identifier of the NF for short in this application.

For example, the identifier of the NF may be an NF instance identifier (NF instance ID), or may be another identifier that can be used to uniquely identify the NF. This is not specifically limited in this application. Currently, the ACME certificate management mechanism does not support using an identifier of an NF as a certificate subject or an ACME identifier.

This application provides a network element verification method, to provide an NF network element verification manner based on an identifier of an NF, to verify authenticity of the identifier of the NF, verify that the identifier of the NF is not forged, or verify that the identifier of the NF is not tampered with. A first authentication device (or referred to as a first authentication network element) may authenticate the NF network element based on the ACME protocol. Therefore, an automatic and efficient NF network element verification and certificate management mechanism can be implemented.

The following describes a network element and a device to which the method provided in this application is applied. The method may be implemented by a to-be-verified NF and a first authentication device.

The NF may be a to-be-verified NF in a service-based architecture network. Specifically, the NF network element may be a network element such as an AMF or an SMF. This is not specifically limited. The NF may serve as an ACME client (or referred to as a client for short) in an ACME procedure.

The first authentication device may be a device that verifies the NF based on the ACME procedure. After a domain name of the NF network element is successfully verified, the first authentication device may issue a certificate of the NF. For example, the first authentication device may be used as an ACME server (or referred to as a server for short) in the ACME procedure. For example, the first authentication device may be a device such as a CA or a server that supports the ACME procedure. In the following content, the certificate issued after the first authentication device authenticates the NF based on the ACME procedure is referred to as a first certificate.

The ACME procedure may include an account phase, an order and challenge phase, and a certificate issuance (issuance) phase. In the account phase, the client may request the server to register or update an ACME account (referred to as an account for short). In a registration process, the server may obtain a public key of the account of the client. After the account is successfully registered, a message sent by the client to the server is signed by using a private key (or an account private key) of the account of the client. Correspondingly, the server may verify the signature by using the public key (or an account public key) of the account of the client, to ensure that the message is sent by a client with a registered account. In the order and challenge phase, the server may indicate a type of a challenge required in the authentication process to the client, and verify the client based on the type and an ACME identifier associated with the challenge, to verify that the client has control over the ACME identifier. In the certificate issuance phase, the client may request the server to issue a certificate, and the server may issue the certificate including the ACME identifier to the client on which authentication succeeds in the order and challenge phase.

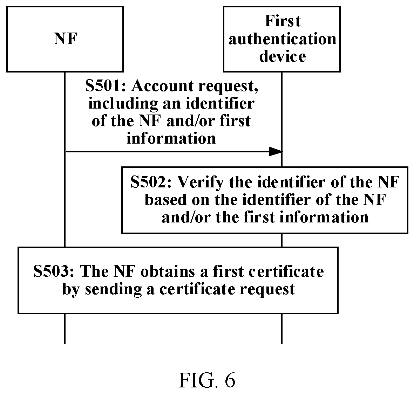

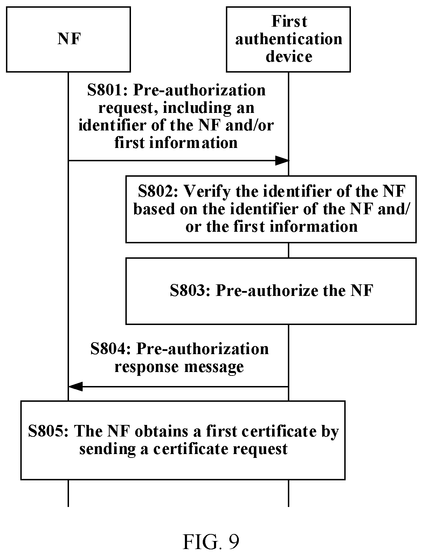

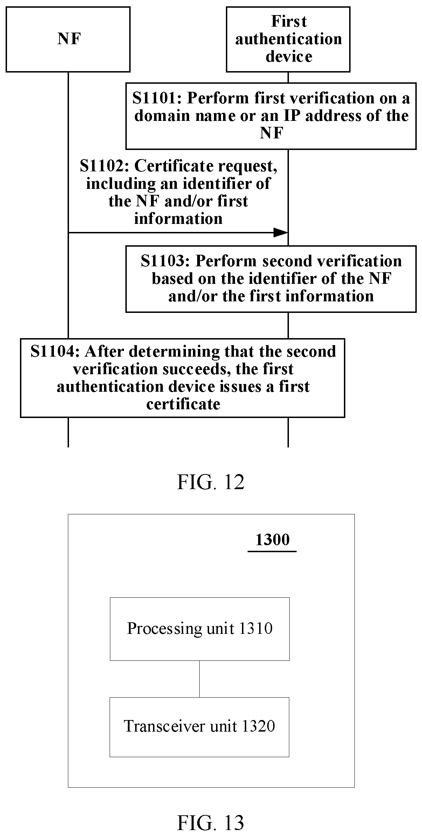

The method shown in this application may be separately applied to the account phase, the order and challenge phase, a pre-authorization phase, and the certificate issuance phase in the ACME procedure. The following provides descriptions in phases. FIG. 2 is a flowchart of applying the method shown in this application to the order and challenge phase. FIG. 6 is a flowchart of applying the method shown in this application to the account phase. FIG. 9 is a flowchart of applying the method shown in this application to the pre-authorization phase. FIG. 12 is a flowchart of applying the method shown in this application to the account phase.

In some embodiments, the method may also be performed by one or more of an OAM, an NRF, or a token (token) generation device. The OAM device may be an operations and maintenance network entity in an operator network, and may be configured to be responsible for maintenance and management of an NF network element and the like, for example, may provide information such as an initial configuration of the NF network element or a domain name registered for the NF network element. The token generation device in this application may be an NRF, or may be another network element or device that supports token generation.

As shown in FIG. 2, a network element verification method provided in this embodiment of this application may include the following steps shown in S101 to S105, and is applied to the order and challenge phase in the ACME procedure.

S101: An NF sends an order request, where the order (order) request includes an identifier of the NF, and the order request is for requesting to create or update an order of issuing a first certificate for the identifier of the NF. Correspondingly, a first authentication device receives the order request.

S102: The first authentication device sends a challenge (challenge) message to the NF. The challenge message includes verification manner information, and the verification manner information indicates a manner (or a challenge type or an authorization type) of verifying the identifier of the NF in the order. Correspondingly, the NF receives the challenge message from the first authentication device.

The challenge message may include an order object (object), indicating a challenge that needs to be completed by the NF before the first authentication device issues the first certificate. Optionally, the order object may include the foregoing verification manner information.

In this application, the manner of verifying the identifier of the NF may include performing verification (or referred to as a trust information-based challenge, a trust challenge, an initial trust challenge, or the like) based on trust information of the network function network element, performing verification (or referred to as an NRF registration-based challenge, an NRF registration challenge, or the like) based on first key verification information stored in an NRF, or performing verification (or referred to as a token-based challenge, a token challenge, or the like) based on a first token issued by the NRF. The following describes the verification manner information with reference to a verification manner of the first authentication device. Details are not described herein.

The challenge type may be determined based on the identifier of the NF. To be specific, when the order request includes the identifier of the NF, and the first authentication device may determine that the verification manner is the initial trust challenge, the NRF registration challenge, or the token challenge.

In S102, the verification manner information may indicate one or more of the foregoing verification manners. For example, the verification manner information may include information corresponding to any one or more of the foregoing verification manners, for example, include a sequence number, an index, or an identifier of the verification manner.

S103: The NF sends a challenge response message based on the verification manner information. Correspondingly, the first authentication device receives the challenge response message.

The challenge response message may include the identifier of the NF and/or first information. The first information is obtained based on the identifier of the NF network element. The identifier of the NF and/or the first information may be for verifying the identifier of the NF in the order.

The challenge response message may further include information about a public key of an account of the NF, for example, an account public key identifier of the NF, so that a first server (that is, the server) verifies authenticity of the message. This also indicates that the identifier of the NF is associated with the account. For example, the public key of the corresponding account of the NF may be found based on the identifier of the NF and the association relationship. In this application, the association relationship, a correspondence, and a binding relationship may be replaced with each other. In other words, meanings of the three are not distinguished in this application. In other words, "association", "correspondence", and "binding" may be replaced with each other.

In this application, if the verification manner includes performing verification based on the trust information of the network function network element, the challenge response message may include the first information, and the first information may include the trust information (or referred to as initial trust information). The trust information may include at least one of a second certificate of the NF, first signature information, or a first message authentication code.

(1) The second certificate may be issued by a second authentication device, and the second certificate may include the identifier of the NF. The second certificate may be signed by the second authentication device by using a private key of the second authentication device. The second authentication device includes, for example, an OAM or an NRF, and the second authentication device may also be a CA. The second certificate may be used to prove that the identifier belongs to the NF, or prove that the NF is bound to the ID.

(2) The first signature information may be signature information obtained by the second authentication device by signing, by using the private key of the second authentication device, information or a message including the identifier of the NF.

(3) The first message authentication code may be obtained based on a symmetric key and the identifier of the NF. The symmetric key may also be referred to as a shared symmetric key, and may be a symmetric key shared by the NF and the first authentication device. The shared key may be provided by the second authentication device (for example, the OAM) for the NF and the first authentication device, or may be pre-configured in the NF and the first authentication device. For example, the shared key may be associated with the identifier of the NF, indicating that the shared key is shared by the first authentication device and the NF to which the identifier of the NF belongs. Therefore, the first authentication device may determine, based on the identifier of the NF, the shared key shared with the NF.

In an example, the first message authentication code may be, for example, a value obtained by processing the identifier of the NF by using a hash (Hash) function and the symmetric key. For example, the identifier of the NF may be used as a part of a message (for example, the challenge response message or a part of the challenge response message). The message may further include other information, for example, information about an ACME account. This is not specifically limited. The first message authentication code may be a message digest of the message. For example, a hash-based message authentication code (hash-based message authentication code, HMAC) or a hash value of the message may be generated by using the hash function and the symmetric key, and the hash-based message authentication code may be used as the first message authentication code. It may be understood that the message digest or the hash value of the message including the identifier of the NF may be obtained in another manner as the first message authentication code. This is not limited in this application.

Optionally, the NF may obtain the trust information from the second authentication device. The trust information may be understood as authentication or initial trust proof of the identifier of the NF by the second authentication device. The first authentication device may perform NF authentication based on the trust information provided by the second authentication device. An effect is that the authentication performed by the second authentication device is not based on the ACME procedure, but is, for example, authentication that requires manual participation, or long-time authentication. In order to implement automatic authentication of the identifier of the NF, or in other words, to implement authentication that is applicable to an authentication cycle or requirement in the ACME procedure, the first authentication device may perform authentication of the identifier of the NF based on the trust information provided by the second authentication device.

If the verification manner includes performing verification based on the first key verification information stored in the NRF, the challenge response message may include the identifier of the NF. The first key verification information may be obtained based on the public key of the ACME account of the NF.

After receiving the challenge response message of the NF, the first authentication device needs to establish an association relationship between the identifier of the NF and the public key of the account, that is, the public key of the account of the NF stored in the first authentication device may be found based on the identifier of the NF. Therefore, in a subsequent step, after the first key verification message is obtained from the NRF, the public key of the account of the NF may be found based on the identifier of the NF, to generate, based on the public key of the account, second key verification information used for comparison.

The first authentication device may obtain, based on the identifier of the NF, the first key verification information stored in the NRF, and perform verification. The first key verification information stored in the NRF may be determined by the NF based on the public key of the account of the NF, and the NF may further send the first key verification information to the NRF. The NF may include the first key verification information in a registration request message or an update request message sent to the NRF. The registration request may be for requesting the NRF to register the NF. The update request may be for requesting the NRF to update NF information.

For example, the first key verification information may be a digest or a hash value determined by the NF based on the public key of the account of the NF, for example, represented as a key authorization (keyAuthorization) parameter.

For example, a value of the keyAuthorization parameter may meet the following:
challenge token || '.' || base64url(Thumbprint(AccPubKey)).

The challenge token identifies a challenge token, and the challenge token may be included in the challenge message from the first authentication device, and is used to uniquely identify a challenge. '||' indicates a character string concatenation operation. base64url indicates a character string encoding method. Thumbprint indicates generating a digest or a hash value using a SHA-256 hash function. AccPubKey indicates the account public key.

If the verification manner includes performing the verification based on the first token issued by the NRF, the challenge response message may include the first information, and the first information may include the first token, that is, the first token may be determined based on the identifier of the NF. A manner in which the NRF generates the first token is not specifically required in this application. In addition, the first token may be issued by another network element or device that supports token generation except the NRF. In other words, an action performed by the NRF in each embodiment in which verification is performed based on the first token may be performed by another network element or device that supports token generation.

For example, the first token of the NF may be generated by the NRF based on a token request of the NF, and the NRF may provide the first token to the NF. The token request may include the identifier of the NF. Optionally, the first token may further include the public key of the account of the NF or indication information of the public key of the account of the NF, for example, an identifier (account key identifier, AccKid) of the public key or an account public key identifier, to prove the association relationship between the NF and the account. The indication information of the public key of the account of the NF may be included in the token request.

It may be understood that the first token in this application may be a token for verifying the identifier of the NF. For example, the NF may include the indication information in the token request, to indicate that the token is used by the first authentication device to verify the identifier of the NF. In addition, the first token may further include the indication information indicating that the token is used by the first authentication device to verify the identifier of the NF.

At least one of the identifier of the NF, the indication information of the public key of the account of the NF, or the indication information indicating that the token is used by the first authentication device to verify the identifier of the NF may be carried in a claim (claim) or an authorization scope (scope) of the first token.

S104: The first authentication device verifies the identifier of the NF based on the identifier of the NF and/or the first information.

A manner in which the first authentication device performs verification may correspond to the verification manner information. For example, the first authentication device may verify the identifier of the NF based on the identifier of the NF and/or the first information and based on the verification manner indicated by the verification manner information. The following describes, with reference to Manner 1 to Manner 3, the manner in which the first authentication device verifies the identifier of the NF. Details are not described herein.

S105: The NF obtains a first certificate by sending a certificate request message, where the certificate request is for completing the order.

The NF may send the order request to the first authentication device, and the first authentication device may issue, based on the order request, the first certificate corresponding to the identifier of the NF. Correspondingly, the NF may obtain the first certificate issued by the first authentication device. The first certificate may be understood as a certificate issued by the first authentication certificate for the identifier of the NF. Alternatively, it may be considered that the first certificate has an association relationship with the identifier of the NF, that is, the identifier of the NF corresponds to the first certificate.

For example, the certificate request is a certificate signing request (certificate signing request, CSR).

In a possible embodiment, the certificate request may be sent based on an order status. For example, when the order is in a completed state, the NF may send the certificate request. For example, after a specific period of time after the order request is sent, or after the NF receives a response message indicating that the order is completed, the NF may consider that the order is in the completed state. The response message may be sent by the first authentication device after the order is completed. Alternatively, the NF may send an order status query message to the first authentication device, to query whether the order is completed. If the first authentication device has completed the order, the first authentication device may send a response message indicating that the order is completed.

In addition, in another possible embodiment, the certificate request does not need to be sent in an order completed state. If the first authentication device has not completed the order when receiving the certificate request, the first authentication device may reply with a rejection or a response message indicating that the order is not completed.

In S105, when the order is in a completed state, and verification corresponding to the identifier of the NF in the order succeeds, the first authentication device may issue the first certificate of the NF based on the certificate request after receiving the certificate request.

In a possible embodiment, the certificate request may include the identifier of the NF. Correspondingly, the first authentication device may determine, based on the identifier of the NF, to issue the first certificate to the NF. For example, when the identifier of the NF in the certificate request has been successfully verified, the first authentication device may issue a certificate corresponding to the certificate request. For another example, in S104, if the first authentication device determines that the identifier of the NF is successfully verified, the first authentication device may store the association relationship between the account of the NF and the identifier of the NF. When receiving a certificate request sent by the NF by using a specific account, the first authentication device may obtain an association relationship that is between the identifier of the NF and the account and that is carried in the certificate request, and compare the association relationship with the stored association relationship between the account and the identifier of the NF. If a comparison result indicates that the two association relationships are consistent (or the two association relationships include a same identifier of the NF, and the same identifier of the NF corresponds to a same account of the NF in the two association relationships), it indicates that the identifier of the NF has been successfully verified and is bound to the account. In this case, the first authentication device may issue the first certificate. If the comparison result indicates inconsistence, the first authentication device may reject the certificate request. Therefore, the association relationship between the identifier of the NF and the account of the NF may be verified in a certificate issuance process, so that security of certificate issuance can be further improved.

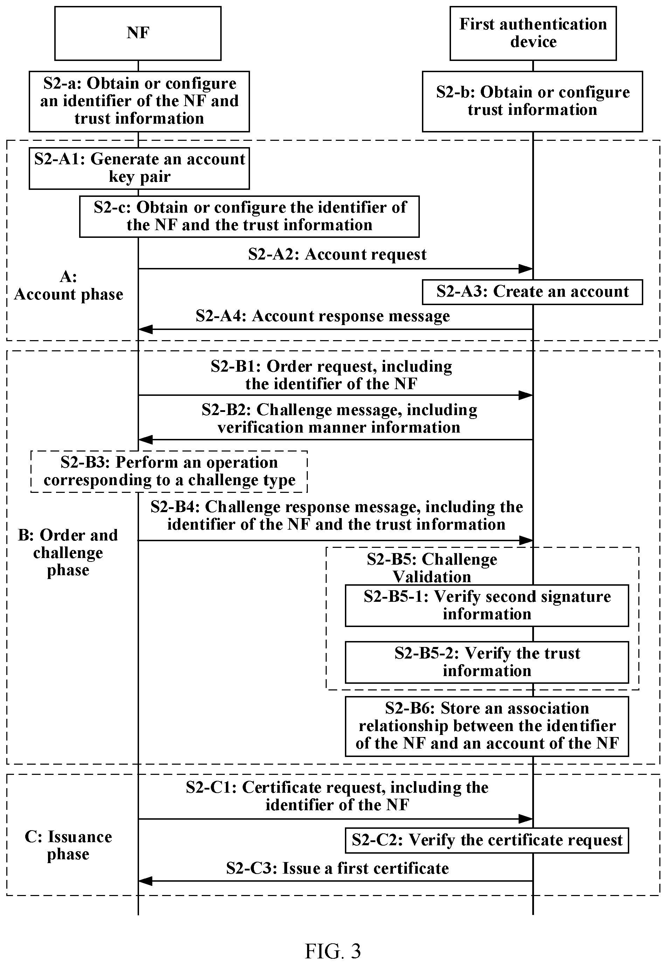

Based on the procedure shown in FIG. 3, the first authentication device may verify the identifier of the NF based on the identifier of the NF and/or the first information from the NF, to support or adapt to an NF identifier-based NF verification manner implemented in the order and challenge phase of the ACME protocol.

The following uses Manner 1 to Manner 3 as an example to describe the manner in which the first authentication device verifies the identifier of the NF based on the identifier of the NF and/or the first information in this application.

Manner 1: The verification manner includes performing verification based on the trust information of the network function network element. The first authentication device performs the verification based on the trust information.

Manner 1 may include a manner 1-1, a manner 1-2, and a manner 1-3. The following separately provides descriptions.

Manner 1-1: If the verification manner includes performing the verification based on the trust information of the network function network element, and the trust information includes the second certificate, the first authentication device may verify the second certificate based on a public key of the second authentication device.

The public key of the second authentication device may be configured in the first authentication device. Alternatively, the public key of the second authentication device may be included in a root certificate corresponding to the second certificate, and the first authentication device first verifies the second certificate by using the root certificate configured in the first authentication device. If the verification succeeds, the public key of the second authentication device may be obtained. The second certificate includes the identifier of the NF. If it is determined, based on the public key of the second authentication device, that the second certificate is successfully verified, it may indicate that the identifier of the NF is successfully verified.

Manner 1-2: If the verification manner includes performing the verification based on the trust information of the network function network element, and the trust information includes the first signature information, the first authentication device may verify the first signature information based on a public key of the second authentication device.

If the first authentication device determines, based on the public key of the second authentication device, that the verification of the first signature information succeeds, it may indicate that the verification of the identifier of the NF succeeds. Otherwise, if the first authentication device determines, based on the public key of the second authentication device, that the verification of the first signature information fails, it may indicate that the verification of the identifier of the NF fails.

Manner 1-3: If the verification manner includes performing the verification based on the trust information of the network function network element, and the trust information includes the first message authentication code, the first authentication device may generate a second message authentication code based on the symmetric key and the identifier of the NF, compare the first message authentication code with the second message authentication code to determine whether they are consistent or inconsistent, and determine, based on a comparison result, whether verification of the identifier of the NF succeeds or fails.

A method for generating the second message authentication code by the first authentication device is the same as a method for generating the first message authentication code by the NF. If the first message authentication code is the consistent with the second message authentication code, it indicates that the verification of the identifier of the NF succeeds. If the first message authentication code is inconsistent with the second message authentication code, it indicates that the verification of the identifier of the NF fails. The symmetric key may be provided by the second authentication device for the first authentication device, or may be configured in the first authentication device. The symmetric key and the identifier of the NF are provided for or configured in the first authentication device together, so that the first authentication device can obtain the first shared key based on the identifier of the NF in the message.

Manner 2: If the verification manner includes performing verification based on the first key verification information stored in the NRF, and the NRF may store the identifier of the NF and the first key verification information, the first authentication device may obtain the first key verification information from the NRF based on the identifier of the NF, or obtain, based on the identifier of the NF, the identifier of the NF stored in the NRF.

In Manner 2, the challenge response message in S103 may further include information about the public key of the account of the NF, for example, an account public key identifier of the NF, so that a server verifies authenticity of the message. This also indicates that the identifier of the NF is associated with the account. For example, the public key of the corresponding account of the NF may be found based on the identifier of the NF and the association relationship.

The first authentication device may verify the first key verification information based on the public key of the account of the NF, and determine a verification result of the identifier of the NF based on a verification result of the first key verification information. If the first authentication device determines, based on the public key of the account of the NF, that the verification of the first key verification information succeeds, it may be determined that the verification of the identifier of the NF succeeds. If the first authentication device determines, based on the public key of the account of the NF, that the verification of the first key verification information fails, it indicates that the verification of the identifier of the NF fails.

Specifically, if the first key verification information is the same as the second key verification information, it indicates that the verification of the first key verification information succeeds, or the verification of the identifier of the NF succeeds; or if the first key verification information is different from the second key verification information, it indicates that the verification of the first key verification information fails, or the verification of the identifier of the NF fails.

For example, in the manner of verifying the first key verification information based on the public key of the account of the NF, the first authentication device generates the second key verification information based on the public key of the account of the NF in a manner the same as that in which the NF generates the first key verification information, and compares whether the first key verification information is the same as the second key verification information. In other words, the first key verification information may be a digest or a hash value determined by the NF based on the public key of the account of the NF. The first authentication device may determine a new digest or hash value based on the public key of the account of the NF by using a same algorithm. The new digest or hash value is the second key verification information.

In a possible embodiment of Manner 2, the first authentication device may request the first key verification information from the NRF based on the identifier of the NF, and the NRF provides the first key verification information for the first authentication device based on a request of the first authentication device.

The first authentication device may obtain the public key of the account of the NF based on the identifier of the NF and the association relationship between the identifier of the NF and the public key of the account (for example, as described in step S103), and generate the second key verification information, to verify whether the first key verification information is the same as the second key verification information.

For example, the first key verification information may be carried in the registration request message or the update request message sent by the NF to the NRF. The message may further carry the identifier of the NF. For example, the identifier of the NF and/or the first key verification information may be carried in an NF profile (NF profile) in the registration request message or the update request message. After verifying the message, the NRF may store a correspondence between the identifier of the NF and the first key verification information. The first authentication device may send a request message to the NRF, where the request message may include the identifier of the NF, and is for requesting the first key verification information. Optionally, the request message may further include an identifier indicating to obtain the first key verification information. The NRF may search for the corresponding first key verification information based on the identifier of the NF in the request message, and send the first key verification information to the first authentication device.

It may be understood that the registration request message or the update request message sent by the NF to the NRF may be sent before or after the challenge response message. This is not specifically limited in this application.

Optionally, the challenge response message sent by the NF to the first authentication device may further include an identifier or an address of the NRF. The identifier or the address of the NRF may be used by the first authentication device to determine an NRF that stores the first key verification information of the NF. Therefore, the first authentication device may determine, based on the identifier or the address of the NRF, the NRF that stores the first key verification information of the NF, to send the request message to the NRF. Alternatively, the address of the NRF may be preconfigured in the first authentication device, that is, the first key verification information of the NF may be stored by a default NRF. In addition, alternatively, the first authentication device may determine, based on the identifier of the NF, the NRF that stores the first key verification information of the NF. For example, the first authentication device queries, based on the identifier of the NF, an NRF with which the NF is registered, where the NRF is an NRF that stores the first key verification information of the NF.

In another possible embodiment of Manner 2, the NRF pushes the first key verification information and the identifier of the NF to the first authentication device, and the first authentication device searches, based on the identifier of the NF, for an account public key of the NF corresponding to the identifier of the NF, to generate the second key verification information.

For example, the first key verification information may be carried in a request message sent by the NF to the NRF. The request message may further carry the identifier of the NF. After the NF is registered, the NRF may push the identifier of the NF and the first key verification information to the first authentication device when a push condition of the first key verification information is met. The push condition of the first key verification information may include, for example, any one or more of the following: (a) The first authentication device subscribes to a push service of the key verification information of the NF from the NRF. (b) The NRF is configured to push, to the first authentication device, key verification information (including but not limited to the first key verification information) that is for verifying the identifier of the NF and that is of the NF after the key verification information is generated. (c) When the registration request message or the update request message of the NF includes the first key verification information, the first key verification information is pushed to the first authentication device by default. Alternatively, it may be understood that the first key verification information carried in the registration request message or the update request message may indicate the NRF to push the key verification information to the first authentication device. (d) The registration request message or the update request message includes indication information, and the indication information indicates the NRF to push the first key verification information to the first authentication device.

It may be understood that timing at which the NRF pushes the first key verification information to the first authentication device may be before or after the NF sends the challenge response message to the first authentication device. This is not specifically limited in this application.

In this implementation, the first authentication device may search, based on the identifier of the NF in the challenge response message, for the public key of the account of the NF corresponding to the identifier of the NF, and generate the second key verification information as described in step S103, to verify whether the first key verification information is the same as the second key verification information.

Manner 3: If the verification manner includes performing verification based on the first token issued by the NRF, the first authentication device may verify the first token based on the public key of the NRF. For example, the first authentication device may verify a signature of the first token based on the public key of the NRF, and the signature may be obtained by performing signature based on a private key of the NRF.

Optionally, in Manner 3, the challenge response message in S103 may further include information about the public key of the account of the NF, for example, an account public key identifier of the NF, so that a server verifies authenticity of the message. This also indicates that the first token is associated with the account.

In a possible implementation of Manner 3, the NF may send a token request to a token provider (provider), to request the token provider to generate a token, and the NF sends the first token to the first authentication device after obtaining the first token generated by the token provider. For example, the NF token provider may be the NRF, or may be another network element or device that supports token generation.

In another possible implementation of Manner 3, after generating the first token, a token provider may push the first token to the first authentication device when a token push condition is met, for example, push the identifier of the NF and the first token. For example, the token push condition includes: (a) The first authentication device subscribes to a push service of the first token of the NF from the token provider. (b) The NRF is configured to push, to the first authentication device, a token (including but not limited to the first token) that is for verifying the identifier of the NF and that is of the NF after the token is generated. (c) The token request includes indication information, and the indication information indicates the NRF to push the first token to the first authentication device.

In this implementation, the challenge response message may not carry the first token, but carry the identifier of the NF. The first authentication device may search, based on the identifier of the NF in the challenge response message, for the first token that is from the NRF and that corresponds to the identifier of the NF.

In another possible implementation of Manner 3, alternatively, the first authentication device may request, from the NRF based on the identifier of the NF carried in the challenge response message, the first token corresponding to the identifier of the NF, and the NRF may feed back the first token based on the identifier of the NF from the first authentication device. For this implementation, refer to the implementation in which the first authentication device requests the first key verification information from the NRF in Manner 2.

It may be understood that, in S104, the first authentication device may verify the identifier of the NF in one or more of the foregoing Manner 1 to Manner 3. The first authentication device may determine, based on the verification manner information, the manner of verifying the identifier of the NF. For example, if the verification manner information indicates that the verification manner of the identifier of the NF includes performing the verification based on the first token issued by the NRF, in S104, the first authentication device may determine, based on the verification manner information, to verify the identifier of the NF in Manner 3. In addition, the first authentication device may alternatively determine, based on information included in the challenge response message, the manner of verifying the identifier of the NF. For example, if the challenge response message includes the first token, in S104, the first authentication device may determine, based on the first token, to verify the identifier of the NF in Manner 3.

In a possible embodiment, the NF may obtain the trust information in this application before performing ACME account registration (or before obtaining the account public key of the NF), or the NF may obtain any of the foregoing trust information after performing ACME account registration (or after obtaining the account public key of the NF). If any of the foregoing trust information is obtained after the ACME account registration is performed (or after the account public key of the NF is obtained), the trust information of the NF may be determined based on account information of the NF. The account information is, for example, an account identifier (account identifier, Acc ID), an account public key (account public key, AccPubKey), or an identifier (account key identifier, AccKid) of the account public key.

For example, if the trust information includes the second certificate, after the NF completes account registration (or obtains the account public key of the NF), an OAM may issue the second certificate based on the identifier of the NF and the account information. The second certificate may include the identifier of the NF and the account information. If the trust information includes the first signature information, after the NF completes account registration (or after the account public key of the NF is obtained), the OAM may sign, based on a private key of the OAM, information or a message including the identifier of the NF and the account information, to obtain the first signature information. If the trust information includes the first message authentication code, after the NF completes account registration (or obtains the account public key of the NF), an operation or processing may be performed on the identifier of the NF and the account information by using the first shared key, to generate the first message authentication code.

In this embodiment, the trust information may be used to prove the account of the NF, or prove the association relationship between the account of the NF and the identifier of the NF. For example, the information about the account of the NF may be an account public key, an account public key identifier, or the like. When receiving a message from the NF, the first authentication device may verify, based on the association relationship, whether the identifier of the NF that sends the message and the account meet the association relationship that is between the account of the NF and the identifier of the NF and that is proved by the trust information. Therefore, security can be further improved. The NF may obtain the account information of the NF in an account registration or account establishment phase in the ACME procedure, and then may obtain the trust information based on the identifier of the NF and the account information. In other words, generation or issuance of the trust information needs to be performed after the account registration (or after the account public key of the NF is obtained).

If the first authentication device verifies the identifier of the NF based on the first key verification information of the NF, the NF needs to generate the first key verification information based on the account public key (as described in S103), to prove the account of the NF. In addition, if the first information includes the first token of the NF, and the NF has completed account registration before generating the first token (or after obtaining the account public key of the NF), the first token generated by the NRF may also include the account information of the NF, to prove the account of the NF.

It may be understood that, in Manner 1 to Manner 3, the manner of verifying the identifier of the NF is described based on the identifier of the NF and/or the first information carried in the challenge response message. Manner 1 to Manner 3 may be further applied to a case in which the identifier of the NF and/or the first information are/is carried in another message other than the challenge response message. With reference to descriptions of Manner 1 to Manner 3, the first authentication device may verify the identifier of the NF based on the identifier of the NF and/or the first information carried in the another message. For example, the challenge response message in Manner 1 to Manner 3 may be replaced with another message in the ACME procedure, where the another message is, for example, an account request, a pre-authorization request, or a certificate request, or may be a message newly introduced in the ACME procedure. This is not specifically limited.

In a possible embodiment of this application, the challenge response message in S103 may further include second signature information of the NF, and the second signature information may be obtained through signature based on a private key of the account of the NF. For example, the second signature information may be that the NF signs the challenge response message by using the private key of the account, to obtain the second signature information, and includes the second signature information in the challenge response message. For another example, the second signature information may be obtained by the NF by signing, by using the private key of the account, the information or the message including the identifier of the NF and/or the first information. After obtaining the second signature information, the NF may constitute the challenge response message based on the information or the message including the identifier of the NF and/or the first information and the second signature information.

In this embodiment, optionally, the challenge response message may further include the indication information (for example, the account public key identifier) of the public key of the account of the NF, to indicate the public key of the account of the NF. Correspondingly, the first authentication device may learn of the public key of the account of the NF based on the indication information of the public key, and verify the second signature information based on the public key, to ensure that the account is not forged.

Similarly, in this application, the another message sent by the NF to the first authentication device may further include signature information obtained through signature based on the private key of the account of the NF. The first authentication device may verify the signature information based on the public key of the account of the NF, to ensure that an account for each message sent by the NF is trusted. Other messages such as an order request, an account request, a pre-authorization request message, and a certificate request are not specifically limited.

The following describes, with reference to flowcharts shown in FIG. 3 to FIG. 5B, an example implementation of a manner of verifying the identifier of the NF in the order and challenge phase in the ACME procedure according to the communication method provided in this application. This implementation is used as an example description of the communication method in this application, and should not be used as a limitation on the implementation of the communication method in this application. For example, based on the flowcharts in this application, if a manner of arranging and combining a procedure message and information carried in the message is changed, or an execution time sequence between steps is changed, a changed procedure should also belong to an implementation of the communication method in this application.

In the procedure shown in FIG. 3, an NF is used as an ACME client, and a first authentication device is used as an ACME server for description. In this procedure, the identifier of the NF is verified through a trust challenge (or referred to as trust information verification or a trust information challenge) in the order and challenge phase. Optionally, in the order and challenge phase, a challenge related to the domain name or the IP address of the NF may be further performed. For example, the challenge related to the domain name may be a domain name service (domain name service, DNS) challenge, and the challenge related to the IP address may be an IP challenge. Details are not described in this application. FIG. 3 may include the following steps.

S2-a: An NF obtains or configures an identifier of the NF and trust information.

The identifier of the NF may include an NF instance identifier. Optionally, the identifier of the NF may further include a domain name and/or an IP address of the NF.

In this application, the domain name of the NF may be a fully qualified domain name (fully qualified domain name, FQDN) of the NF.

The trust information may be the second certificate, the first signature information, or the first message authentication code described in this application. For details, refer to the descriptions in this application. Details are not described in the flowchart.

In an example, in a 5G system, an NF profile of an NF includes an NF instance identifier, and may further include a domain name and/or an IP address. The NF profile may be configured with the trust, to prove that the NF profile belongs to the NF, that is, the NF profile may include the trust information.

S2-b: A first authentication device obtains or configures information for verifying the trust information of the NF.

For example, when the trust information includes a second certificate, the information for verifying the trust information may include a public key or a root certificate of a second authentication device configured to verify the second certificate. For another example, when the trust information includes first signature information, the information for verifying the trust information may include a public key or a root certificate of a second authentication device configured to verify the first signature information. For another example, when the trust information includes a first message authentication code, the information for verifying the trust information may include a symmetric key for verifying the first message authentication code.

Optionally, in S2-b, the first authentication device may obtain, from the second authentication device (for example, an OAM), the information for verifying the trust information of the NF, or may obtain, based on a local configuration, the information for verifying the trust information of the NF.

S2-A1: The NF generates an account key pair, including a client account private key and a corresponding account public key.

S2-A2: The NF sends an account request (or referred to as an account request message) to the first authentication device, to create a new client account for the NF in the first authentication device. The account request may include the account public key of the NF. The message may be signed by using an account private key of the NF to prove that the account belongs to the NF.

S2-A3: The first authentication device creates an account, and stores the account public key of the NF. The first authentication device may perform integrity verification on the account request based on the account public key in the account request.

S2-A4: The first authentication device sends an account response message to the NF. The account response message includes an identifier of the account public key. The identifier of the account public key is usually a uniform resource locator (uniform resource locator, URL) of the account. A form of the public key is not limited in this application.

It should be noted that the foregoing describes an account creation process. In addition, if another account management procedure such as account update or account query is performed, S2-A1 does not need to be performed. In addition, the request message in step S2-A2 may no longer include the public key of the account, but may carry public key indication information of the account, for example, an account public key identifier. The public key indication information may be used by the first authentication device to obtain a stored public key of the account corresponding to the public key indication information, and perform corresponding integrity verification in S2-A3. Details are not described herein. For details, refer to IETF Request for Comments 8555 (IETF RFC 8555).

After an account is created, a message sent by a client to a server may include indication information of the account public key of the NF, for example, an account public key identifier. In addition, the message sent by the NF to the first authentication device needs to be signed by using the account private key of the NF, so that the first authentication device can obtain, based on the indication information of the account public key, the account public key of the NF stored in the SA1, and verify the message by using the public key, to prove that the message is sent from the client NF. Therefore, unless otherwise specified, all messages sent by the NF to the first authentication device in the following procedure include the indication information of the account public key, for example, the account public key identifier and signature information (for example, the second signature information in this application) generated by performing signature by using the account private key of the NF. For example, the message sent by the NF (as a client) to the first authentication device (as a server) may include the account public key of the NF. Therefore, the first authentication device may obtain the account public key of the NF from the challenge response message.

The foregoing S2-A1 to S2-A4 may be steps that belong to the account phase in the ACME procedure.

S2-B1: The NF sends an order request to the first authentication device.

The order request includes one or a group of ACME identifiers, including an identifier type and a name. It should be noted that the ACME identifier is not limited to a domain name or an IP address. For example, the ACME identifier may be (or include) an NF identifier, for example, an NF instance identifier, or another identifier that can be for uniquely identifying the NF. This is not specifically limited in this application. When the ACME identifier is an NF identifier, optionally, the NF identifier may be further used as indication information, to indicate that a challenge type corresponding to the NF identifier needs to be used. For example, when the ACME identifier is an NF identifier, the NF identifier may indicate the first authentication device to select, when determining a challenge method, a challenge type applicable to the NF identifier. For another example, when the ACME identifier is an NF identifier, the NF identifier may indicate that an identifier supported by the NF is not limited to a domain name or an IP address of the NF, but may also be the NF identifier, that is, indicate that the NF supports at least a challenge method applicable to the NF identifier, or indicate that the first authentication device is supported in selecting a challenge method applicable to the NF identifier.

It may be understood that, in the verification based on the trust information, the challenge method applicable to the NF identifier may include the verification performed based on the trust information of the network function network element described in this application.

It may be further understood that S2-B1 may be used as an example of S101 in the procedure shown in FIG. 2.

S2-B2: The first authentication device sends a challenge message. The challenge message may include an indication of a verification manner that the NF needs to complete, that is, include verification manner information. The verification manner information may indicate to perform verification based on the trust information of the network function network element.

The notification message may be sent based on the order request. The verification manner information may be determined based on the identifier of the NF in the order request.

S2-B2 may be used as an example implementation of S102 in the procedure in FIG. 2.

Before S2-B2, the first authentication device may determine a challenge type. For example, if the ACME identifier in S2-B1 includes the NF identifier, the first authentication device may determine, based on the ACME identifier, a challenge method that needs to be sent. For example, if the server determines that a type of the ACME identifier is the NF identifier, another challenge method different from a DNS challenge or an IP challenge may be selected, for example, an initial trust challenge used in this embodiment. It should be noted that, if the server determines that the type of the ACME identifier is a domain name or an IP address, the challenge method selected by the server may include not only a DNS challenge or an IP challenge, but also an initial trust challenge or another challenge method. In other words, that the ACME identifier includes the NF identifier is not a mandatory condition of this application.

S2-B3: Optionally, the NF performs a corresponding operation based on the challenge type required by the first authentication device, to enable the server to perform verification.

In a case of a challenge based on the trust information, S2-B3 may be skipped.

S2-B4: The NF sends a challenge response message to the first authentication device, where the response message further includes the identifier of the NF and the trust information. As described in S103, the trust information may include one or more of the second certificate, the first signature information, or the first message authentication code.

Optionally, the challenge response message may further include the indication information of the account public key of the NF, second signature information, or the like, and is for verifying the account of the NF, to further improve security.

S2-B4 may be used as an example implementation of S103 in the procedure in FIG. 2.

For example, in S2-B4 or an optional implementation of S103, a challenge response message in the ACME protocol may be modified, that is, an NF identifier (for example, an NF instance ID) and/or the trust information are/is included in the message. Optionally, for the initial trust challenge, uniform resource locator information in the challenge response message may be removed. In another optional implementation, a URL is assigned a null value (null) or a pseudo URL value (a specific form is not limited), and the NF identifier and/or the trust information are/is sent to the server in an out-of-band (out-of-band) manner. For example, 3rd generation partnership project (3rd generation partnership project, 3GPP) signaling sent by the NF to the server includes at least two parts. One part belongs to a container (container) of the ACME protocol. The container includes a challenge response message in the existing ACME protocol. For example, a URL is assigned a null value (null) or a pseudo URL value. The other part may not be in the container but belongs to the signaling, and includes the NF identifier and/or the trust information. In this implementation, the ACME protocol of this part does not need to be modified. This implementation method is also applicable to another ACME protocol-related message used to carry the NF identifier and/or the trust information. Details are not described in this application.

S2-B5: After receiving the challenge response message, the first authentication device validates a challenge.

The verification shown in S2-B5 may include verification shown in S2-B5-1 and/or S2-B5-2.

The challenge response message may include the second signature information. Correspondingly, in S2-B5-1, the first authentication device may verify the second signature information based on the public key of the account of the NF, to ensure that the verification of the challenge response message succeeds, that is, ensure that the message is not tampered with. For example, the first authentication device may receive the account public key from the NF based on S2-A2 and S2-A3, and store the account public key.

In S2-B5-2, the first authentication device may verify the trust information. For details, refer to the descriptions of Manner 1 in this application. Details are not described herein again.

S2-B5 or S2-B5-2 may be used as an example implementation of S104 in the procedure in FIG. 2.

S2-B6: After a challenge succeeds, the first authentication device stores an association relationship between the identifier of the NF and the account of the NF.

This association may enable the server to verify, in the certificate issuance procedure, whether an ACME identifier (or an identifier of the NF) included in a CSR is the same as the identifier of the NF (that is, the identifier of the NF in the association relationship) in step S2-B1. In addition, in the issuance procedure, the first authentication device may not need to verify the trust information in step S2-B5-2 again. It should be noted that the association relationship may be that one account is associated with a plurality of NF identifiers, a plurality of accounts are associated with one NF identifier, or one account is associated with one NF identifier. This is not limited in this application.

S2-C1: The NF sends a certificate request (for example, a CSR) to the first authentication server.

The certificate request may include an NF identifier. For example, the NF identifier is used as the ACME identifier. For another example, the NF identifier is carried in the certificate request as information other than the ACME identifier.

S2-C2: The first authentication server verifies the certificate request.

The verification of the certificate request may include verifying a signature of the certificate request by using the public key of the account of the NF.

In addition, as described in S2-B6, the first authentication device may verify, based on the stored association relationship between the identifier of the NF and the account, an association relationship between an account in the certificate request and the identifier of the NF included in the certificate request. If the association relationship between the NF identifier included in the certificate request is included in the association relationship that is between the identifier of the NF and the account and that is stored in the first authentication device, it indicates that the NF identifier has passed challenge validation, and a certificate may be issued.

S2-C3: The first authentication server issues a first certificate. Correspondingly, the NF obtains the first certificate. The first certificate may be carried in a certificate response message.

S2-C1 to S2-C3 may be used as an example implementation of S105.

Optionally, the verification step shown in S2-B5-2 may alternatively be performed in a process of S2-C2, that is, S2-B5-2 is not performed in S2-B5.

The foregoing is steps involved in the procedure in FIG. 3.

In another implementation of the procedure shown in FIG. 3, S2-a may alternatively be replaced with S2-c: The first authentication device obtains the trust information after the account key pair is generated in S2-A1 or after the account response message is received in S2-A3. In this case, the trust information may be determined based on account information of the NF. The account information is, for example, an account identifier, an account public key, or an account public key identifier.

For example, the trust information may be the second certificate including the identifier of the NF and the account information, the first signature information obtained by signing, based on a private key of the OAM, information or a message including the identifier of the NF and the account information, or the first message authentication code obtained by performing an operation or processing on the identifier of the NF and the account information by using a first shared key.

It may be understood that either S2-a or S2-c may be implemented. A difference lies in that S2-c may be performed after an account key pair of the NF is generated or an ACME account of the NF is created. Therefore, the trust information in S2-c may be determined based on the account information of the NF. Therefore, the account information of the NF may be additionally verified, to further ensure security. For an implementation of this step, refer to the descriptions of determining the trust information based on the account information of the NF in this application. Details are not described in the flowchart again.

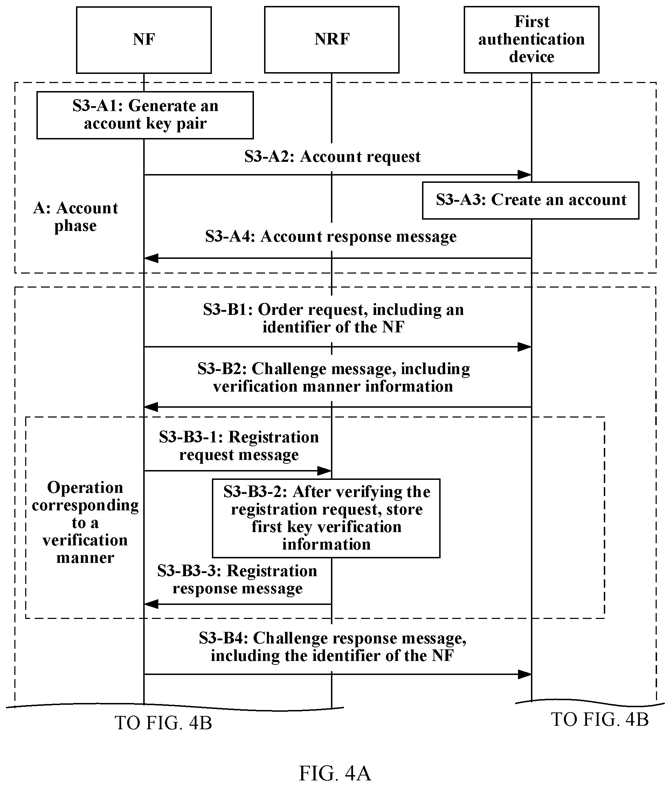

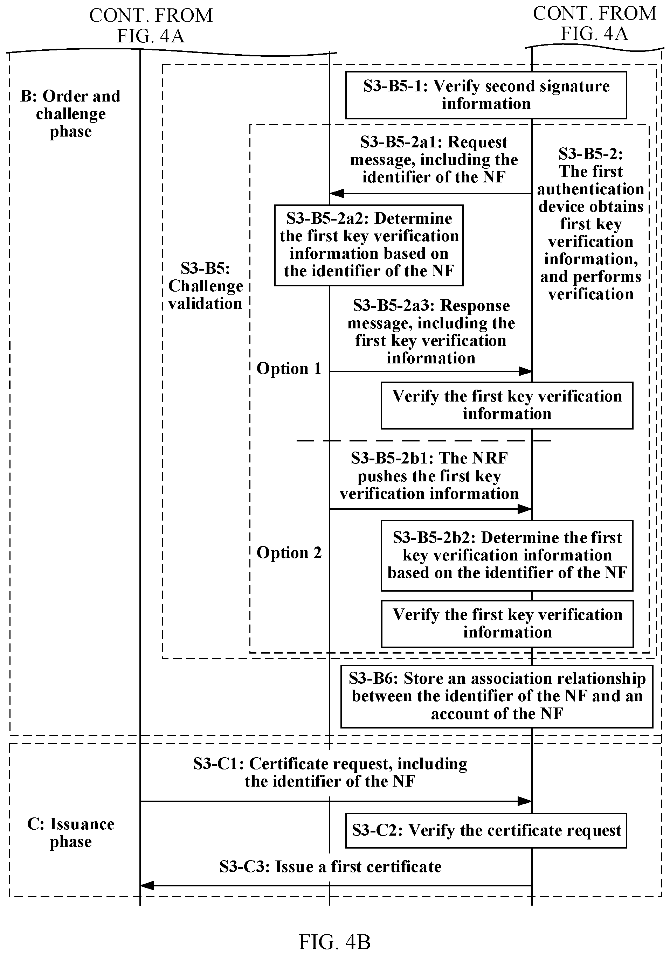

In the procedure shown in FIG. 4A and FIG. 4B, an NF is used as an ACME client, and a first authentication device is used as an ACME server for description. In this procedure, the identifier of the NF is verified through an NRF registration challenge (or verification or a challenge based on NRF registration) in the order and challenge phase. Optionally, in the order and challenge phase, a challenge related to the domain name or the IP address of the NF may be further performed. For example, the challenge related to the domain name may be a DNS challenge, and the challenge related to the IP address may be an IP challenge. Details are not described in this application. FIG. 4A and FIG. 4B may include the following steps.

For S3-A1 to S3-A4, refer to S2-A1 to S2-A4. That is, for steps of the account phase in the ACME procedure in FIG. 4A and FIG. 4B, refer to steps of the account phase in the ACME procedure shown in FIG. 3.

S3-B1: The NF sends an order request to the first authentication device.

For S3-B1, refer to the descriptions of S2-B1. However, a difference between the two steps lies in that, in the NRF registration challenge, a challenge method applicable to the identifier of the NF may include verification performed based on the first key verification information stored in the NRF in this application.

S3-B2: The first authentication device sends a challenge message. The challenge message may include an indication of a verification manner that the NF needs to complete, that is, include verification manner information. The verification manner information may indicate to perform verification based on the first key verification information stored in the NRF.

The notification message may be sent based on the order request. The verification manner information may be determined based on the identifier of the NF in the order request.

S3-B2 may be used as an example implementation of S102 in the procedure in FIG. 2.

Before S3-B2, the first authentication device may determine a challenge type. For example, if the ACME identifier in S2-B1 includes the NF identifier, the first authentication device may determine, based on the ACME identifier, a challenge method that needs to be sent. For example, if the server determines that a type of the ACME identifier is the NF identifier, another challenge method different from a DNS challenge or an IP challenge may be selected, for example, an NRF registration challenge used in this embodiment. It should be noted that, if the server determines that the type of the ACME identifier is a domain name or an IP address, the challenge method selected by the server may include not only a DNS challenge or an IP challenge, but also an NRF registration challenge or another challenge method. In other words, that the ACME identifier includes the NF identifier is not a mandatory condition of this application.

S3-B3-1: The NF sends a registration request message to the NRF.

The registration request message includes the first key verification information. The first key verification information may be determined based on a public key of an account of the NF. For example, the first key verification information may be keyAuthorization.

Optionally, the registration request message may further include the identifier of the NF.

In this step, the NF may register with the NEF based on the registration request message. An objective of the registration procedure is to register a profile of the NF with an NRF server. The profile may include the first key verification information, and may further include the identifier of the NF. In addition, in the registration request message, the first key verification information may alternatively be carried outside the profile of the NF. This is not limited.

In a possible embodiment, the profile of the NF may further include one or more of the following parameters: an NF type (NF type), an identifier of a network to which the NF belongs (for example, an ID of a public land mobile network (public land mobile network, PLMN) to which the NF belongs), single network slice selection assistance information (single-network slice selection assistance information, S-NSSAI) to which the NF belongs, a network slice instance identifier (network slice instance ID, NSI ID) to which the NF belongs, an IP address or an FQDN of the NF, an NF set identifier (set ID), an NF service set identifier (service set ID), and the like. This is not limited herein.

Optionally, S3-B3-1 to S3-B3-3 are a procedure in which the NF registers with the NRF. S3-B3-1 to S3-B3-3 may be understood as that the NF performs a corresponding operation based on the challenge type required by the first authentication device, to enable the server to perform verification. In the procedure, the corresponding operation includes requesting, by the NF, registration with the NRF.

S3-B3-2: After verifying the registration request message of the NF, the NRF stores the first key verification information.

For example, the first key verification information is included in the profile of the NF in the registration request message. Correspondingly, in S3-B3-2, the NRF may store the profile of the NF. For another example, the first key verification information is not included in the profile of the NF in the registration request message. Correspondingly, in S3-B3-2, the NRF may store the profile of the NF and the first key verification information.

S3-B3-3: The NRF sends a registration response message to the NF, to indicate that the NF is successfully registered.

The registration request message in step S3-B3-1 may include information that can be used by the NRF to verify an identity of the NF, for example, include an OAM signature. Alternatively, the NRF has other information that can authenticate the NF. A method for protecting registration is not limited in this application (or refer to an NF registration method in the 3GPP standard 33.501).

It may be understood that, in the procedure shown in S3-B1-1 to S3-B3-3, the registration request message may also be replaced with an update request. Correspondingly, the registration-related content may be replaced with NF information update. For example, after the NF completes registration with the NRF, the NF may provide the profile of the NF (and/or other information such as the first key verification information) for the NRF by using an update message, so that the NRF updates the profile of the NF.

S3-B4: The NF sends a challenge response message to the first authentication device.

The challenge response message may include the identifier of the NF.

Optionally, the message may further include address information of the NRF, so that the server side may determine the NRF that stores the first key verification information, and obtain information about the NF from the NRF.

It may be understood that S3-B4 may be used as an example implementation of S103 in the procedure in FIG. 2. For the challenge response message, refer to the descriptions in S103.

S3-B5: After receiving the challenge response message, the first authentication device validates a challenge.

The verification shown in S3-B5 may include verification shown in S3-B5-1 and/or S3-B5-2.

The challenge response message may include an identifier of the public key of the account and the second signature information. Correspondingly, in S3-B5-1, the first authentication device may obtain the stored public key of the account of the NF based on the identifier of the public key of the account to verify the second signature information, to ensure that the verification of the challenge response message succeeds, that is, ensure that the message is not tampered with. For example, the first authentication device may receive the account public key from the NF based on S3-A2 and S3-A3, and store the account public key. The first authentication device may associate the identifier of the public key of the account of the NF based on the identifier of the NF in the challenge response message, and store the association relationship, so that the first authentication device can obtain the identifier of the public key of the account of the NF or the public key of the account of the NF based on the identifier of the NF in a subsequent step, and further obtain second key verification information (as described in Manner 2).

In addition, in S3-B5-2, the first authentication device may obtain the first key verification information stored in the NRF, and verify the first key verification information. For details, refer to the descriptions of Manner 2 in this application.

Specifically, as shown in FIG. 4A and FIG. 4B, the first authentication device may obtain the first key verification information from the NRF by using S3-B5-2a1 to S3-B5-2a3. In S3-B5-2a1, the first authentication device may send a request message to the NRF, where the request message may include the identifier of the NF, and the identifier of the NF may be included in the challenge response message. In S3-B5-2a2, the NRF queries the profile of the NF based on the identifier of the NF, to obtain the first key verification information corresponding to the identifier of the NF. In S3-B5-2a3, the NRF sends a response message to the first authentication device, where the response message carries the first key verification information. Therefore, the first authentication device may obtain the first key verification information from the NRF.

Optionally, the response message in S3-B5-2a3 may further include trust information of the NF. For the trust information, refer to FIG. 3 or the descriptions in the procedure in FIG. 3. The response message may be sent by the NF to the NRF by using a registration request or an update request. Correspondingly, after obtaining the trust information, the first authentication device may further verify the trust information. For a verification manner, refer to the descriptions in S2-B5 in FIG. 3, or refer to the descriptions in Manner 1 in this application. Details are not described again. The trust information may be carried in the request message (for example, the registration request or the update request) sent by the NF to the NRF. Therefore, the NRF may obtain the trust information from the NF. In other words, the identifier of the NF may be verified based on a trust challenge and an NRF registration challenge. In addition, the first authentication device may perform verification based only on the trust information in the response message. For example, the response message does not include the first key verification information, but includes the trust information.

In addition, the response message in S3-B5-2a3 may be signed by using a private key of the NRF. Correspondingly, the first authentication device may verify the signature based on a public key of the NRF. In addition, if the response message in S3-B5-2a3 is not signed by using the private key of the NRF, a secure channel between the NRF and the first authentication device may be established, and a message between the NRF and the first authentication device is transmitted through the secure channel. For example, the secure channel may be a channel based on a security protocol such as a TLS protocol or a network layer security protocol. This is not limited in this application.

It should be noted that the response message in S3-B5-2a3 may not include the public key identifier of the account of the NF, and the first authentication device may search for the stored public key identifier of the account of the NF based on the identifier of the NF, to obtain the public key of the account of the NF.

In addition, the first authentication device may obtain the first key verification information from the NRF by using S3-B5-2b1 and S3-B5-2b2. In S3-B5-2b1, the NRF may push the first key verification information of the NF to the first authentication device. For example, refer to the descriptions in Manner 2. When a push condition is met, the NRF may push the identifier of the NF and the first key verification information to the first authentication device. Correspondingly, in S3-B5-2b2, the first authentication device may search for the corresponding first key verification information based on the identifier of the NF.

Optionally, in the embodiment of the first key verification information pushed by the NRF shown in S3-B5-2b1 and S3-B5-2b2, the first key verification information pushed by the NRF may be signed by using the private key of the NRF. Correspondingly, the first authentication device may verify the signature by using the public key of the NRF.

It should be noted that the message (carrying the first key verification information) sent by the NRF to the first authentication device in S3-B5-2b1 may not include the public key identifier of the account of the NF, and the first authentication device may search for the stored public key identifier of the account of the NF based on the identifier of the NF, to obtain the public key of the account of the NF.

S3-B5 or S3-B5-2 may be used as an example implementation of S104 in the procedure in FIG. 2.

For S3-B6, refer to the descriptions of S2-B6.

For S3-C1 to S3-C3, refer to the descriptions of S2-C1 to S2-C3. A difference lies in that, in the descriptions of S2-C1 to S2-C3, content related to verification of the trust information in S3-C1 to S3-C3 may be replaced with verification of the first key verification information stored in the NRF.

Optionally, the verification step shown in S3-B5-2 may alternatively be performed in a process of S3-C2, that is, S3-B5-2 is not performed in S3-B5.

The foregoing is steps involved in the procedure in FIG. 4A and FIG. 4B.

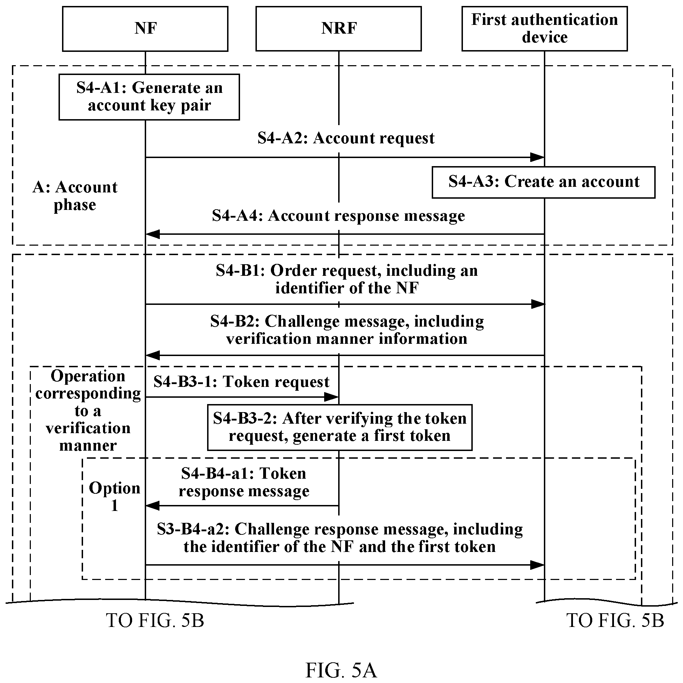

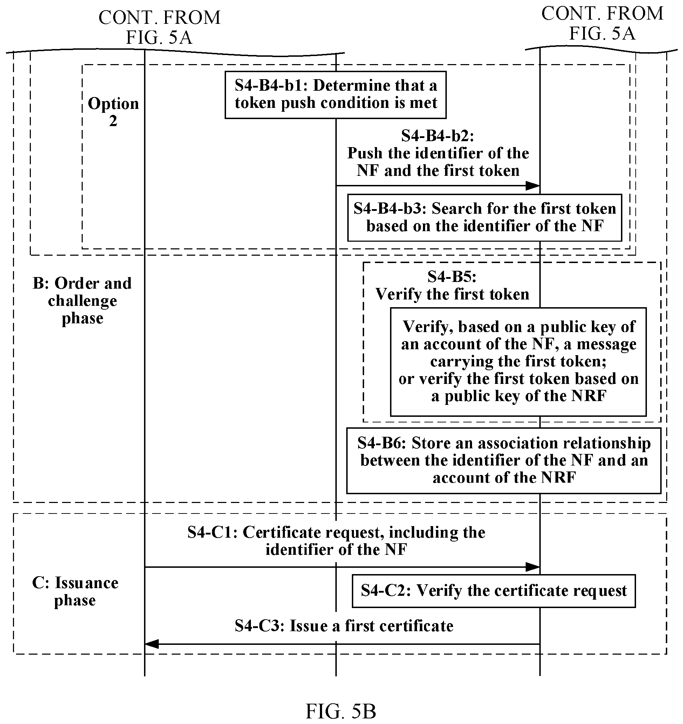

In the procedure shown in FIG. 5A and FIG. 5B, an NF is used as an ACME client, and a first authentication device is used as an ACME server for description. In this procedure, the identifier of the NF is verified through a token challenge (verification or a challenge based on a token, or the like) in the order and challenge phase. Optionally, in the order and challenge phase, a challenge related to the domain name or the IP address of the NF may be further performed. For example, the challenge related to the domain name may be a DNS challenge, and the challenge related to the IP address may be an IP challenge. Details are not described in this application. FIG. 5A and FIG. 5B may include the following steps.

For S4-A1 to S4-A4, refer to S2-A1 to S2-A4. That is, for steps of the account phase in the ACME procedure in FIG. 5A and FIG. 5B, refer to steps of the account phase in the ACME procedure shown in FIG. 3.

S4-B1: The NF sends an order request to the first authentication device.

For S4-B1, refer to the descriptions of S2-B1. However, a difference between the two steps lies in that, in the token challenge, a challenge method applicable to the identifier of the NF may include verification performed based on the first token in this application.

S4-B2: The first authentication device sends a challenge message. The challenge message may include an indication of a verification manner that the NF needs to complete, that is, include verification manner information. The verification manner information may indicate to perform verification based on the first token. For the first token, refer to the descriptions of the first token in the procedure in FIG. 2. Details are not described herein again.

The notification message may be sent based on the order request. The verification manner information may be determined based on the identifier of the NF in the order request.

S4-B2 may be used as an example implementation of S102 in the procedure in FIG. 2.

Before S4-B2, the first authentication device may determine a challenge type. For example, if the ACME identifier in S4-B1 includes the NF identifier, the first authentication device may determine, based on the ACME identifier, a challenge method that needs to be sent. For example, if the server determines that a type of the ACME identifier is the NF identifier, another challenge method different from a DNS challenge or an IP challenge may be selected, for example, a first token challenge used in this embodiment. It should be noted that, if the server determines that the type of the ACME identifier is a domain name or an IP address, the challenge method selected by the server may include not only a DNS challenge or an IP challenge, but also a first token challenge or another challenge method. In other words, that the ACME identifier includes the NF identifier is not a mandatory condition of this application.

S4-B3-1: The NF sends a token request to the NRF. The token request may be for requesting the NRF to issue the first token.

The token request may include the identifier of the NF. Correspondingly, the first token may include the identifier of the NF.

In addition, the token request may further include information such as a domain name or an IP address of the NF.

Optionally, the token request may further include information indicating that a token of the NF is used for verification of the first token challenge. The information may indicate that the token is a token used to apply for an ACME certificate, to distinguish from a token used in another scenario. Correspondingly, the first token may carry the information indicating that the token of the NF is used for verification of the first token challenge, to indicate a function of the first token. In addition, the token request may further include indication information of the public key of the account of the NF (for example, the public key identifier of the account) or the public key of the account. Correspondingly, the NRF may include the indication information of the public key of the account (for example, the public key identifier of the account) or the public key of the account in the first token, to prove the account of the NF.

Optionally, the NF may send a token request to the NRF after registering with the NRF.

S4-B3-2: The NRF performs verification based on the token request, and the NRF generates the first token after the verification succeeds.

For example, the NRF may verify validity of the NF that sends the token request.

In addition, a declaration or authorization scope in the first token may include one or more of the identifier of the NF, the indication information of the public key of the account of the NF (for example, the public key identifier of the account), the public key of the account, or the information indicating that the token of the NF is used for verification of the first token challenge.

After the first token is generated, refer to Manner 3. The first authentication device may obtain the first token in two manners.

In one manner, the NF may obtain the first token from the NRF, and provide the first token for the first authentication device. For example, the first token may be carried in the challenge response message. As shown in steps S4-B4-a1 and S4-B4-a2, the method includes: S4-B4-a1: The NRF sends a token response message to the NF, where the token response message carries the first token. Correspondingly, the NF may receive the first token. S4-B4-a2: The NF sends the first token to the first authentication device, and correspondingly, the first authentication device obtains the first token. The first token may be carried in the challenge response message sent by the NF to the first authentication device.

In this implementation, S4-B4-a2 may be used as an example implementation of S103 in the procedure in FIG. 2.

In the other manner, the NRF may push the first token to the first authentication device. For example, as shown in steps S4-B4-b1 to S4-B4-b3: In S4-B4-b1, the NRF may determine, after generating the first token, that a token push condition is met. For the token push condition, refer to the descriptions in Manner 3. In S4-B4-b2, the NRF may send the identifier of the NF and the first token to the first authentication device. In S4-B4-b3, the first authentication device may search, based on the identifier of the NF, at least one identifier of the NF pushed by the NRF and a corresponding token for the first token.

Optionally, the first token sent by the NRF to the first authentication device may be signed by using a private key of the NRF. Correspondingly, the first authentication device may verify the signature by using a public key of the NRF.

S4-B5: The first authentication device verifies the first token, that is, performs token challenge validation.

If the first token is from the NF, in S4-B5, the first authentication device may verify, based on the public key of the account of the NF, a message carrying the first token. For example, if the first authentication device obtains the first token by using S4-B4-a2, the first token may be carried in the challenge response message, and the challenge response message is signed by using a private key of the account of the NF, the first authentication device may verify the signature by using the public key of the account of the NF.

If the first token comes from the NRF, and the first token may be signed by using the private key of the NRF, in S4-B5, the first authentication device may verify the first token based on the public key of the NRF.

S4-B6: After the first token is verified, the first authentication device stores an association relationship between the account of the NF and the identifier of the NF.

If the challenge validation in S4-B5 succeeds, it indicates that the account information (or the public key identifier of the account) included in the first token is associated with the identifier of the NF carried in the first token. Therefore, in S4-B6, the association relationship between the identifier of the NF and the account may be stored, to verify, in a certificate issuance phase, the identifier of the NF and the account that are involved in the certificate request.

For S4-C1 to S4-C3, refer to the descriptions of S2-C1 to S2-C3. A difference lies in that, in the descriptions of S2-C1 to S2-C3, content related to verification of the trust information in S4-C1 to S4-C3 may be replaced with verification of the first token.

The foregoing is steps involved in the procedure in FIG. 5A and FIG. 5B.

It may be understood that an example in which the NRF generates the first token of the NF is used for description in the procedure in FIG. 5A and FIG. 5B. In some scenarios, the first token may alternatively be generated by another device or network element other than the NRF. The device or the network element may be configured to perform an action that is performed by the NRF and that is related to the first token.

As shown in FIG. 6, a network element verification method provided in this embodiment of this application may include the following steps shown in S501 to S503, and is applied to the account phase in the ACME procedure.

S501: An NF sends an account request, where the account request includes an identifier of the NF and/or first information. Correspondingly, a first authentication device receives the certificate request.

The identifier of the NF and/or the first information may be for verifying the identifier of the NF.

Refer to the descriptions related to the procedure in FIG. 2. It may be understood that, in this application, the verification of the identifier of the NF may include performing verification (or referred to as a trust information-based challenge, a trust challenge, an initial trust challenge, or the like) based on trust information of a network function network element, performing verification (or referred to as an NRF registration-based challenge, an NRF registration challenge, or the like) based on first key verification information stored in an NRF, or performing verification (or referred to as a token-based challenge, a token challenge, or the like) based on a first token issued by the NRF.

When verifying the identifier of the NF based on the identifier of the NF, the first authentication device may perform the verification based on the first key verification information stored in the NRF. When verifying the identifier of the NF based on the first information, the first authentication device may perform the verification based on the trust information of the network function network element, where the first information includes the trust information; or when verifying the identifier of the NF based on the first information, the first authentication device may perform the verification based on the first token issued by the NRF, where the first information may include the first token.

Optionally, the identifier of the NF may be carried in an EAB identifier (EAB-ID) field in the account request. The EAB identifier field may be used to carry an identifier or information that needs to be related to an account that the account request requests to establish. Therefore, in an account registration process, the first authentication device may determine, based on the EAB identifier field, that content carried in the field is associated with the account. Specifically, in this application, after account registration, the first authentication device may determine that the identifier of the NF carried in the EAB field is associated with the account. In addition, the identifier of the NF and/or the first information may also be sent to a server in an out-of-band manner. For example, refer to the descriptions of sending the identifier of the NF and/or the first information in the out-of-band manner in S2-B4.

Whether the account request carries the first information and/or whether the first information includes the trust information or the first token may be determined by the NF based on verification manner information sent by a device or a network element such as the first authentication device or an OAM, may be determined based on verification manner information locally preconfigured or stored by the NF, or may be determined based on a protocol definition. The first authentication device may determine the verification manner information based on a local configuration, an indication of the OAM, or a protocol definition. For the verification manner information, refer to the descriptions in the procedure in FIG. 3.

S502: The first authentication device verifies the identifier of the NF based on the identifier of the NF and/or the first information.

A manner of verifying the identifier of the NF may include performing verification based on trust information of the network function network element, performing verification based on first key verification information stored in an NRF, or performing verification based on a first token issued by the NRF. For the foregoing verification manner, refer to the descriptions of the manner of verifying the identifier of the NF in S104. Details are not described again. For example, for descriptions of performing the verification based on the trust information of the network function network element, refer to Manner 1. For descriptions of performing the verification based on the first key verification information stored in the NRF, refer to Manner 2. For descriptions of performing the verification based on the first token issued by the NRF, refer to Manner 3. A difference lies in that, a message name related to the challenge response message in Manner 1 to Manner 3 is replaced with an account request or a related message.

After the first authentication device completes the verification on the identifier of the NF, the first authentication device may send an account response message to the NF, as described in S2-A4. After receiving the account response message, the NF may complete steps of the order phase (including order request, challenge request, challenge response, and verification steps corresponding to S2-B1 to S2-B6) for an ACME identifier (such as a domain name or an IP address, and the NF identifier is not used) according to the ACME protocol. Different from the steps S2-B1 to S2-B6, the order phase executed at this time is completely for the ACME identifier and is executed according to the existing ACME protocol.

S503: The NF obtains, by sending a certificate request message, a first certificate issued by the first authentication device for the identifier of the NF.

The NF may send a certificate request (for example, a CSR) to the first authentication device. After determining, in S502, that the identifier of the NF is successfully verified, the first authentication device may issue, based on the certificate request, the first certificate corresponding to the identifier of the NF after determining that the ACME identifier is successfully verified in the order phase. Correspondingly, the NF may obtain the first certificate issued by the first authentication device.

Based on the procedure shown in FIG. 6, verification of the identifier of the NF and certificate issuance may be supported or adapted in an account phase in the ACME protocol.

It may be understood that, in the method embodiment, a change of the account phase in the ACME protocol includes, for example, at least one of the following:
Difference 1: In the account request in the account phase, an NF identifier is additionally carried.

Difference 2: In the verification manner in which verification is performed based on the trust information of the network function network element, the account request may further include the trust information. Alternatively, the trust information may be carried in another message other than the request message. This is not limited in this application.

Difference 3: In the verification manner in which the first key verification information stored in the NRF is verified, after sending the account request, the NF may further send a registration request or an update request to the NRF, to include the first key verification information, so that the NRF stores the first key verification information. In addition, before sending the account response message, the first authentication device may further obtain the first key verification information from the NRF and perform verification.

Difference 4: Optionally, the account response message may indicate that the identifier of the NF is successfully verified. For example, the NF and/or the first authentication device may consider by default that the account response message indicates that the identifier of the NF is successfully verified. In addition, the account response message may alternatively additionally carry indication information, to indicate that the identifier of the NF is successfully verified.

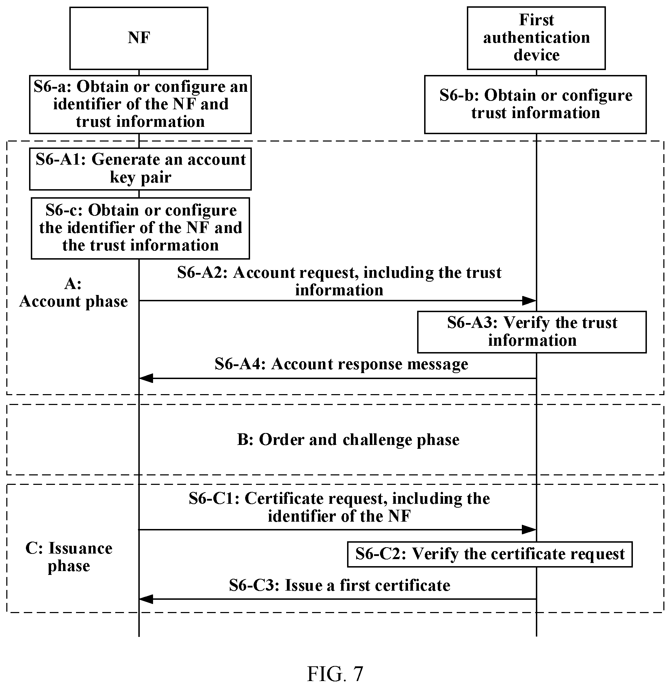

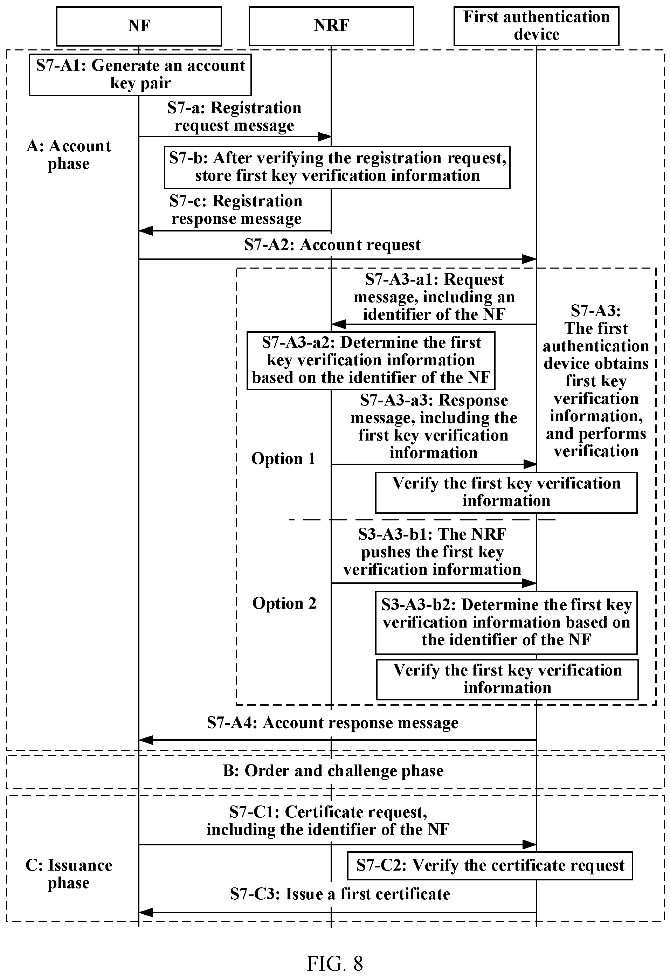

The following describes, with reference to flowcharts shown in FIG. 7 and FIG. 8, an example implementation of a manner of verifying the identifier of the NF in the account phase in the ACME procedure according to the communication method provided in this application.

In the procedure shown in FIG. 7, an NF is used as an ACME client, and a first authentication device is used as an ACME server for description. In this procedure, the identifier of the NF is verified through a trust challenge (or referred to as trust information verification or a trust information challenge) in the account phase. For example, FIG. 7 may include the following steps.

For S6-a and S6-b, refer to the descriptions of S2-a and S2-b respectively. In addition, S6-a may alternatively be replaced with S6-c. In S6-c, the NF may obtain trust information after generating an account key pair. The trust information may be determined based on account information of the NF. Therefore, the account information of the NF may be additionally verified, to further ensure security.

S6-A1: The NF generates an account key pair, including a client account private key and a corresponding account public key.

S6-A2: The NF sends an account request (or referred to as an account request message) to the first authentication device, to create a new client account for the NF in the first authentication device.

The account request includes trust information. In addition, the account request may further include an identifier of the NF. For example, the identifier of the NF and/or first information may be carried in an EAB identifier field, to indicate the first authentication device to store an association relationship between the account and the identifier of the NF after the account is created. In addition, refer to the descriptions in S2-B4. The identifier of the NF and/or the first information may alternatively be sent to a server in an out-of-band manner or the like.

S6-A2 may be used as an example implementation of S501 in FIG. 6.

S6-A3: After receiving the account request, the first authentication device verifies the trust information.

In S6-A3, the first authentication device may verify the trust information with reference to Manner 1 in this application, or may verify the trust information with reference to the procedure in S2-B5. Details are not described herein again.

S6-A3 may be used as an example implementation of S502 in FIG. 6.

In S6-A3, the first authentication device may also create an NF account. In addition, the first authentication device may further store the association relationship between the account and the identifier of the NF.

S6-A4: After the verification succeeds, the first authentication device sends an account response message to the NF.

In addition, after the trust information is successfully verified in S6-A3, the first authentication device may associate the created account with the identifier of the NF. Therefore, the first authentication device may issue, based on the ACME procedure, for example, after the account is created, a certificate with the identifier of the NF as a subject by using a domain name or an IP address verification procedure in a conventional technology. In other words, after S6-A4, a protocol procedure of the order and challenge phase may be performed for the domain name or the IP address of the NF according to a conventional technology, and the first certificate may be issued through the certificate issuance phase. For steps S6-C1 to S6-C3 of the issuance phase, refer to steps in S2-C1 to S2-C3. Details are not described again. A difference from steps S2-C1 to S2-C3 lies in that, the NF identifier is replaced with the domain name or the IP address of the NF. After the first authentication device completes the verification on the domain name or the IP address of the NF, the first authentication device determines the identifier of the NF based on the account corresponding to the domain name or the IP address of the NF and the association relationship between the account and the identifier of the NF that is stored in S6-A3, and issues a certificate for the identifier of the NF.

S6-C1 to S6-C3 may be used as an example implementation of S503 in FIG. 6. A difference lies in that, the NF includes the domain name or the IP address of the NF in a certificate request, and the first authentication device performs verification based on the domain name or the IP address of the NF, and issues the certificate for the identifier of the NF during certificate issuance.

The foregoing is steps involved in the procedure in FIG. 7.

In the procedure shown in FIG. 8, an NF is used as an ACME client, and a first authentication device is used as an ACME server for description. In this procedure, the identifier of the NF is verified through an NRF registration challenge (or verification or a challenge based on NRF registration) in the account phase. For example, FIG. 8 may include the following steps.

S7-A1: The NF generates an account key pair, including a client account private key and a corresponding account public key.

As described in S102, the NF may calculate first key verification information based on the account public key. Different from S102, the "challenge token" for calculating the first key verification information is replaced with a random number generated by the NF, and is not sent by the first authentication device to the NF.

S7-a: The NF sends a registration request message to an NRF.

The registration request message includes the first key verification information.

S7-b: After verifying the registration request of the NF, the NRF stores the first key verification information.

S7-c: The NRF sends a registration response message to the NF.

For S7-a, S7-b, and S7-c, refer to the descriptions in S3-B3-1, S3-B3-2, and S3-B3-3 respectively.

It may be understood that the registration request message may be replaced with an update request message, and the registration response may be replaced with an update response. For a corresponding implementation, refer to the descriptions in this application.

S7-A2: The NF sends an account request (or referred to as an account request message) to the first authentication device, to create a new client account for the NF in the first authentication device.

Refer to the descriptions in Manner 2. The account request may include the identifier of the NF.

In addition, the account request further includes a "challenge token" for calculating the first key verification information in S7-A1. The "challenge token" is used by the first authentication device to calculate second key verification information.

S7-A2 may be used as an example implementation of S501 in FIG. 6.

S7-A3: After receiving the account request, the first authentication device obtains the first key verification information based on the identifier of the NF, and performs verification.

In S7-A3, the first authentication device may obtain, based on the identifier of the NF, the first key verification information stored in the NRF, and verify the first key verification information. For details, refer to the descriptions of Manner 2 in this application. The "challenge token" in generation parameters of the second key verification information for verifying the first key verification information is replaced with the "challenge token" in the account request message in S7-A2.

Specifically, as shown in FIG. 8, the first authentication device may obtain the first key verification information from the NRF by using S7-A3-a1 to S7-A3-a3. For S7-A3-a1 to S7-A3-a3, refer to the descriptions of S3-B5-2a1 to S3-B5-2a3 respectively. Details are not described again.

Optionally, the response message in S7-A3-a3 may further include trust information of the NF. Correspondingly, after obtaining the trust information, the first authentication device may further verify the trust information. For a verification manner, refer to the descriptions in S2-B5 in FIG. 3, or refer to the descriptions in Manner 1 in this application. Details are not described again.

In addition, the first authentication device may obtain the first key verification information from the NRF by using S7-A3-b1 and S7-A3-b2. For S7-A3-b1 to S7-A3-b3, refer to the descriptions of S3-B5-2b1 and S3-B5-2b2 respectively. Details are not described again.

S7-A3 may be used as an example implementation of S502 in FIG. 6.

In S7-A3, the first authentication device may further create an NF account.

In addition, the first authentication device may further store the association relationship between the account and the identifier of the NF.

S7-A4: After the verification succeeds, the first authentication device sends an account response message to the NF.

In addition, after the first key verification information is successfully verified, the first authentication device may associate the created account with the identifier of the NF. Therefore, the first authentication device may issue, based on the ACME procedure, for example, after the account is created, a certificate with the identifier of the NF as a subject by using a domain name or an IP address verification procedure in a conventional technology. In other words, after S7-A4, the order and challenge phase may be performed for the domain name or the IP address of the NF according to a conventional technology, and the first certificate may be issued through the certificate issuance phase. For steps S7-C1 to S7-C3 of the issuance phase, refer to steps in S2-C1 to S2-C3. Details are not described again. A difference from steps S2-C3 to S2-C3 lies in that, the NF identifier is replaced with the domain name or the IP address of the NF. After the first authentication device completes the verification on the domain name or the IP address of the NF, the first authentication device determines the identifier of the NF based on the account corresponding to the domain name or the IP address of the NF and the association relationship between the account and the identifier of the NF that is stored in S7-A3, and issues a certificate for the identifier of the NF.

S7-C1 to S7-C3 may be used as an example implementation of S503 in FIG. 6.

The foregoing is steps involved in the procedure in FIG. 8.

It may be understood that, in the procedure shown in FIG. 8, S7-a, S7-b, and S7-c may be included in a process in which the NF registers with the NRF. The registration process may be independent of the ACME procedure, or may be included in the ACME procedure. This is not specifically limited in this application. For example, the registration process may be performed before the step of sending the account request by the NF in S7-A2, or may be performed after S7-A2.

Optionally, a pre-authorization request may further include the "challenge token" for calculating the first key verification information. The "challenge token" (for example, a random number) may be generated by the NF, and is used by the first authentication device to calculate the second key verification information. The following further provides descriptions based on different verification methods.

In addition, the method shown in this application may be further used in a pre-authorization phase (or a pre-authorization process, an account pre-authorization phase, or an account pre-authorization process) in the ACME procedure. The pre-authorization process may be performed after the account phase or in an account creation/update procedure, and before the order phase (or before the order request is sent). In addition, when pre-authorization is completed, a challenge and verification for an order initiated by an account that has obtained the pre-authorization are no longer required in the ACME procedure. In other words, the order initiated by the account that has obtained the pre-authorization may be deemed as having passed the challenge validation by default.

As shown in FIG. 9, for a pre-authorization process, the method provided in this application may include the following steps shown in S801 to S805.

S801: An NF sends a pre-authorization request, where the pre-authorization request includes an identifier of the NF and/or first information. Correspondingly, a first authentication device receives the pre-authorization request.

The pre-authorization request may be for requesting to pre-authorize an account.

The pre-authorization request may further include indication information of a public key of an account of the NF, for example, an account public key identifier. Alternatively, the pre-authorization request may include an account public key of the NF. Therefore, the first authentication device may obtain the account public key of the NF from the pre-authorization request.

The pre-authorization request may be signed by using a private key of the account of the NF, for example, includes signature information obtained based on the private key. Correspondingly, the first authentication device may verify the signature by using the public key of the account of the NF.

It may be understood that the pre-authorization request may be performed after the NF receives an account phase. For example, after receiving an account response message for identifying an account registration result, the NF sends the pre-authorization request.

S802: The first authentication device verifies the identifier of the NF based on the identifier of the NF and/or the first information.

A manner of verifying the identifier of the NF may include performing verification based on trust information of the network function network element, performing verification based on first key verification information stored in an NRF, or performing verification based on a first token issued by the NRF. For the foregoing verification manner, refer to the descriptions of the manner of verifying the identifier of the NF in S104. Details are not described again. For example, for descriptions of performing the verification based on the trust information of the network function network element, refer to Manner 1. For descriptions of performing the verification based on the first key verification information stored in the NRF, refer to Manner 2. For descriptions of performing the verification based on the first token issued by the NRF, refer to Manner 3. A difference lies in that, a message name related to the challenge response message in Manner 1 to Manner 3 is replaced with a pre-authorization request or a related message. In addition, for Manner 2, when second verification information is calculated, a "token token" parameter in S801 needs to be used.

Whether the pre-authorization request carries the first information and/or whether the first information includes the trust information or the first token may be determined by the NF based on verification manner information sent by a device or a network element such as the first authentication device or an OAM, may be determined based on verification manner information locally preconfigured or stored by the NF, or may be determined based on a protocol definition. The first authentication device may determine the verification manner information based on a local configuration, an indication of the OAM, or a protocol definition. For the verification manner information, refer to the descriptions in the procedure in FIG. 3.

S803: After the identifier of the NF is successfully verified, the first authentication device pre-authorizes the NF. In other words, the first authentication device pre-authorizes the account of the NF.

In S803, after the identifier of the NF is successfully verified, the first authentication device may store the account and the identifier of the NF as an account and an identifier that have passed pre-authorization. For the account and the identifier of the NF that have passed pre-authorization, a corresponding order request does not need to undergo steps such as an order challenge and challenge validation, and may be directly marked as validation passed. For example, for the account and the identifier of the NF that have passed pre-authorization, a corresponding order request does not undergo steps corresponding to S2-B2 to S2-B5 in an ACME order procedure. In a step similar to S2-B6, the first authentication device may store an association relationship between the identifier of the NF and the account of the NF after determining that the identifier of the NF is successfully verified (not based on the challenge validation from S2-B2 to S2-B5).

S804: The first authentication device sends a pre-authorization response message to the NF. The pre-authorization response message may indicate a pre-authorization result, for example, indicating that pre-authorization succeeds or fails.

The pre-authorization response message may indicate that a pre-authorization phase or a pre-authorization procedure ends.

In an example, after the pre-authorization phase ends, the following steps S8-B1 and S8-B2 may be included in the order and challenge phase.

S8-B1: The NF sends an order request to the first authentication device. The order request may include the identifier of the NF, a public key identifier of the account of the NF, and second signature information.

S8-B2: The first authentication device verifies the identifier of the NF and the association relationship between the identifier of the NF and the account.

The first authentication device may obtain the public key of the account based on the identifier of the public key of the account of the NF, and verify the second signature information, to ensure that the verification of the order request message succeeds, that is, ensure that the message is not tampered with. After the verification succeeds, the identifier of the NF and account information of the NF (the public key identifier of the account) are compared with the pre-authorized identifier of the NF and the account information of the NF (the public key identifier of the account) that are stored in S803. If they are the same, the verification of the order request succeeds, and a status of the order is updated (for example, updated to a state indicating that the verification succeeds).

S805: The NF obtains, by using a certificate request message, a first certificate issued by the first authentication device for the identifier of the NF.

The NF may send a certificate request (for example, a CSR) to the first authentication device. After determining, in S5-B2, that the identifier of the NF is successfully verified, the first authentication device may issue, based on the certificate request, the first certificate corresponding to the identifier of the NF. Correspondingly, the NF may obtain the first certificate issued by the first authentication device.

Based on the procedure shown in FIG. 9, verification of the identifier of the NF and certificate issuance may be supported or adapted in a pre-authorization phase in the ACME protocol.

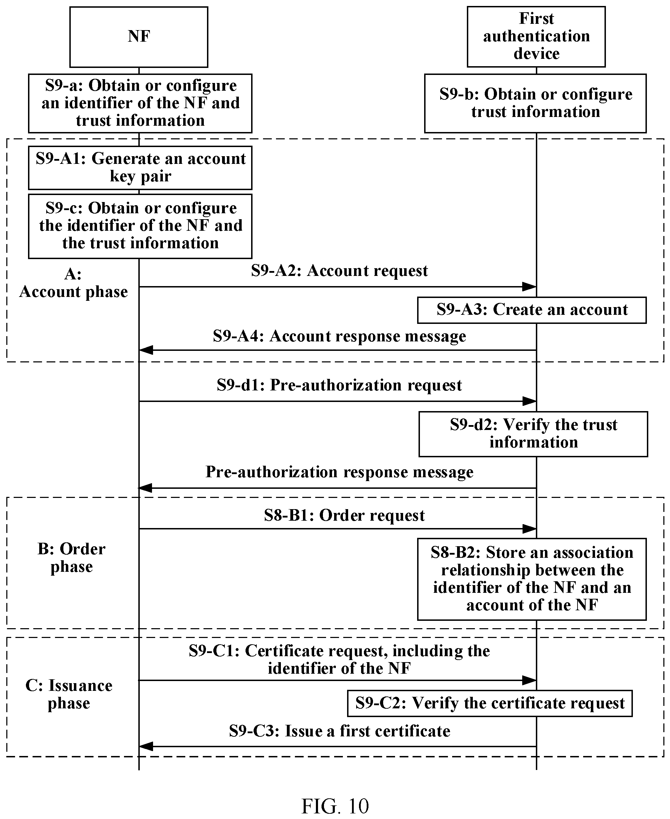

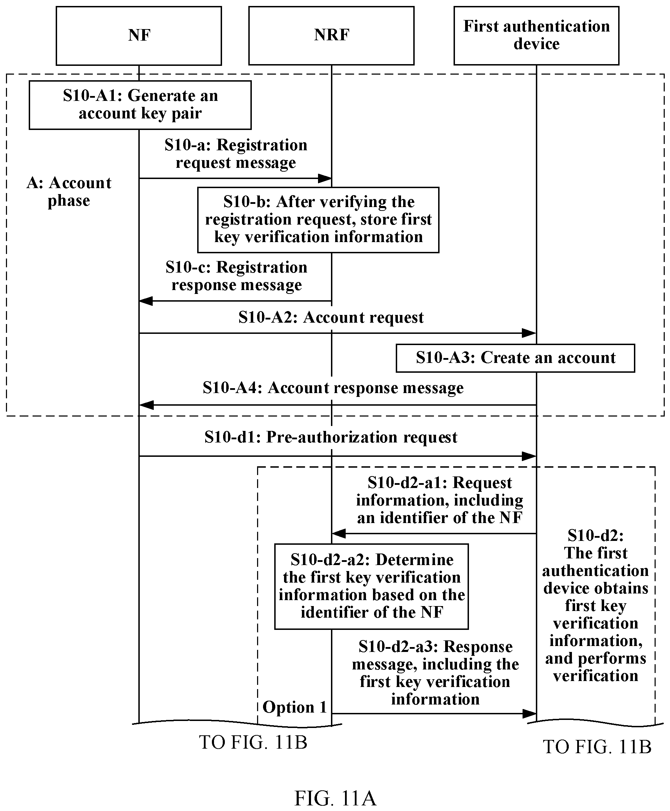

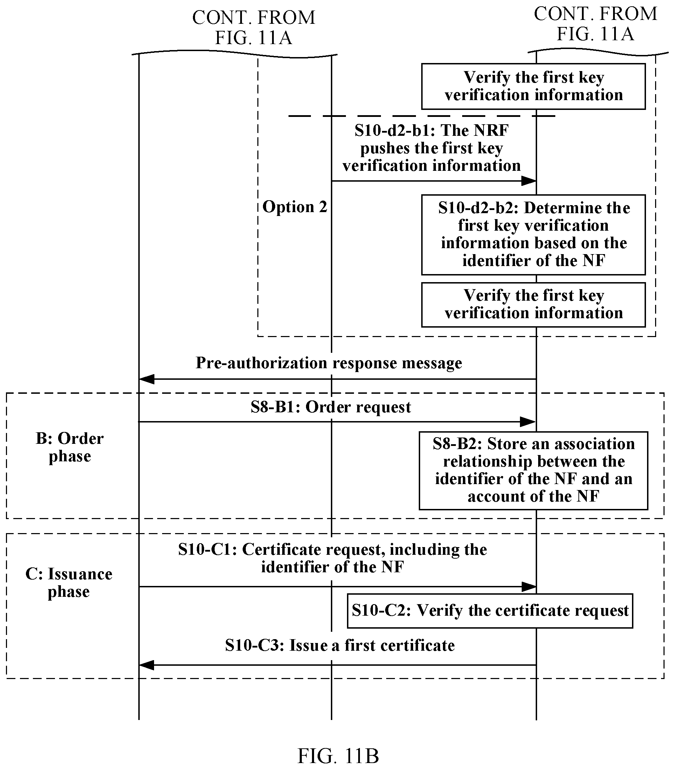

The following describes, with reference to flowcharts shown in FIG. 10 and FIG. 11A and FIG. 11B, an example implementation of a manner of verifying the identifier of the NF in the issuance phase in the ACME procedure according to the communication method provided in this application. FIG. 10 and FIG. 11A and FIG. 11B are described by using an example in which the pre-authorization phase is after the account phase and before the order phase.

In the procedure shown in FIG. 10, an NF is used as an ACME client, and a first authentication device is used as an ACME server for description. In this procedure, the identifier of the NF is verified through a trust challenge (or referred to as trust information verification or a trust information challenge) in the pre-authorization phase. For example, FIG. 10 may include the following steps.

For S9-a and S9-b, refer to the descriptions of S2-a and S2-b respectively. In addition, S9-a may alternatively be replaced with S9-c. For S9-c, refer to the descriptions of S2-c. That is, the trust information in S9-c may be determined based on the account information of the NF. Therefore, the account information of the NF may be additionally verified, to further ensure security.

For S9-A1 to S9-A4, refer to S2-A1 to S2-A4. That is, for steps of the account phase in the ACME procedure in FIG. 10, refer to steps of the account phase in the ACME procedure shown in FIG. 3.

S9-d1: After completing account creation, the NF sends a pre-authorization request to the first authentication device.

The pre-authorization request includes trust information. Refer to the descriptions in Manner 1. The trust information may include one or more of the second certificate, the first signature information, or the first message authentication code. In addition, the pre-authorization request may further include an identifier of the NF.

S9-d1 may be used as an example implementation of S801 in the procedure shown in FIG. 9.

S9-d2: After receiving the pre-authorization request, the first authentication device verifies the trust information.

In S9-d2, the first authentication device may verify the trust information with reference to Manner 1 in this application. Details are not described herein again.

S9-d2 may be used as an example implementation of S802 shown in FIG. 9.

After the trust information is successfully verified, the first authentication device may pre-authorize the NF. For example, refer to the descriptions in S803. In addition, the first authentication device may further send a pre-authorization response message to the NF, as described in S804.

In addition, S8-B1 and S8-B2 may be further performed between the NF and the first authentication device. To be specific, for the account and the identifier of the NF that have passed pre-authorization, a corresponding order request does not undergo steps corresponding to S2-B2 to S2-B5 in an ACME order procedure, but the first authentication device may store the identifier of the NF and an association relationship between the identifier of the NF and the account.

For S9-C1 to S9-C3, refer to steps shown in S2-C1 to S2-C3. Details are not described again.

S9-C1 to S9-C3 may be used as an example implementation of S804 in FIG. 9.

In the procedure shown in FIG. 11A and FIG. 11B, an NF is used as an ACME client, and a first authentication device is used as an ACME server for description. In this procedure, the identifier of the NF is verified through an NRF registration challenge (or verification or a challenge based on NRF registration) in the pre-authorization phase. For example, FIG. 11A and FIG. 11B may include the following steps.

S10-A1: The NF generates an account key pair, including a client account private key and a corresponding account public key.

As described in S102, the NF may calculate first key verification information based on the account public key. Different from S102, the "challenge token" for calculating the first key verification information is replaced with a random number generated by the NF, and is not sent by the first authentication device to the NF.

S10-a: The NF sends a registration request message to an NRF.

S10-b: After verifying the registration request of the NF, the NRF stores the first key verification information.

S10-c: The NRF sends a registration response message to the NF.

For S10-a, S10-b, and S10-c, refer to the descriptions in S3-B3-1, S3-B3-2, and S3-B3-3 respectively.

It may be understood that the registration request message may be replaced with an update request message, and the registration response may be replaced with an update response. For a corresponding implementation, refer to the descriptions in this application.

For S10-A2 to S10-A4, refer to S2-A2 to S2-A4. That is, for steps of the account phase in the ACME procedure in FIG. 11A and FIG. 11B, refer to steps of the account phase in the ACME procedure shown in FIG. 3.

S10-d1: After completing account creation (for example, after receiving an account response message), the NF sends a pre-authorization request to the first authentication device.

The pre-authorization request may include the identifier of the NF. The pre-authorization request further includes a "challenge token" for calculating the first key verification information in S10-A1. The "challenge token" is used by the first authentication device to calculate second key verification information by using the method described in S102.

S10-d1 may be used as an example implementation of S801 shown in FIG. 9.

S10-d2: After receiving the pre-authorization request, the first authentication device performs verification based on the identifier of the NF.

In S10-d2, the first authentication device may obtain, based on the identifier of the NF, the first key verification information stored in the NRF, and verify the first key verification information. For details, refer to the descriptions of Manner 2 in this application. It should be noted that, when the second key verification information for verifying the first key verification information is calculated, the "challenge token" parameter is from the pre-authorization request in S10-d1.

Specifically, as shown in FIG. 11A and FIG. 11B, the first authentication device may obtain the first key verification information from the NRF by using S10-d2-a1 to S10-d2-a3. For S10-d2-a1 to S10-d2-a3, refer to the descriptions of S3-B5-2a1 to S3-B5-2a3 respectively. Details are not described again.

Optionally, the response message in S10-d2-a3 may further include trust information of the NF. Correspondingly, after obtaining the trust information, the first authentication device may further verify the trust information. For a verification manner, refer to the descriptions in S2-B5 in FIG. 3, or refer to the descriptions in Manner 1 in this application. Details are not described again.

In addition, the first authentication device may obtain the first key verification information from the NRF by using S10-d2-b1 to S10-d2-b3. For S10-d2-b1 to S10-d2-b3, refer to the descriptions of S3-B5-2b1 to S3-B5-2b3 respectively. Details are not described again.

S10-d2 may be used as an example implementation of S802 shown in FIG. 9.

In addition, S8-B1 and S8-B2 may be further performed between the NF and the first authentication device. To be specific, for the account and the identifier of the NF that have passed pre-authorization, a corresponding order request does not undergo steps corresponding to S2-B2 to S2-B5 in an ACME order procedure, but the first authentication device may store the identifier of the NF and an association relationship between the identifier of the NF and the account.

In addition, the first authentication device may further send a pre-authorization response message to the NF, as described in S804.

For S10-C1 and S10-C2, refer to steps shown in S2-C1 and S2-C2. Details are not described again.

S10-C1 and S10-C2 may be used as an example implementation of S804 in FIG. 9.

The foregoing is steps involved in the procedure in FIG. 11A and FIG. 11B.

It may be understood that, in the procedure shown in FIG. 1, S10-a, S10-b, and S10-c may be included in a process in which the NF registers with the NRF. The registration process may be independent of the ACME procedure, or may be included in the ACME procedure. This is not specifically limited in this application. For example, the registration process may be performed before the step of sending the account request by the NF in S10-A2, or may be performed after S10-A2.

S10-a, S10-b, and S10-c may alternatively be performed after the account phase. For example, after the NF receives a message corresponding to the account creation, and/or before the NF sends the pre-authorization request, S10-a, S10-b, and S10-c are performed.

As shown in FIG. 12, a network element verification method provided in this embodiment of this application may include the following steps shown in S1101 to S1104, and is applied to the issuance phase in the ACME procedure.

S1101: A first authentication device performs first verification on a domain name or an IP address of an NF.

For example, the first verification may include a DNS challenge performed on the domain name of the NF, and/or an IP address challenge performed on the IP address of the NF.

Optionally, the first authentication device may store a first association relationship after determining that the first verification succeeds. The first association relationship may include an association relationship between account information of the NF (for example, a public key identifier or a public key of an account of the NF) and a domain name of the NF, and/or an association relationship between account information of the NF (for example, a public key identifier or a public key of an account of the NF) and an IP address of the NF.

It may be understood that S1101 includes procedures of an account establishment phase and an order and challenge phase in the ACME procedure. S1101 corresponds to steps S2-A1 to S2-A4 (the account phase) and steps S2-B1 to S2-B5 (the order and challenge phase). It should be noted that S1101 is an existing ACME procedure for verifying the domain name or the IP address of the NF.

S1102: The NF sends a certificate request, where the certificate request includes the identifier of the NF and/or the first information.

The certificate request further includes a domain name or an IP address of the NF.

The identifier of the NF and/or the first information and/or the domain name or the IP address of the NF may be used to verify the identifier of the NF.

Refer to the descriptions related to the procedure in FIG. 2. It may be understood that, the verification of the identifier of the NF in this application may include performing verification based on trust information of the network function network element, performing verification based on first key verification information stored in an NRF, or performing verification based on a first token issued by the NRF.

When verifying the identifier of the NF based on the identifier of the NF, the first authentication device may perform the verification based on the first key verification information stored in the NRF. When verifying the identifier of the NF based on the first information, the first authentication device may perform the verification based on the trust information of the network function network element, where the first information includes the trust information; or when verifying the identifier of the NF based on the first information, the first authentication device may perform the verification based on the first token issued by the NRF, where the first information may include the first token.

Whether the certificate request carries the first information and/or whether the first information includes the trust information or the first token may be determined by the NF based on verification manner information sent by a device or a network element such as the first authentication device or an OAM, may be determined based on verification manner information locally preconfigured or stored by the NF, or may be determined based on a protocol definition. The first authentication device may determine the verification manner information based on a local configuration, an indication of the OAM, or a protocol definition. For the verification manner information, refer to the descriptions in the procedure in FIG. 3.

S1103: The first authentication device performs second verification on the identifier of the NF based on the identifier of the NF and/or the first information.

A manner of verifying the identifier of the NF may include performing verification based on trust information of the network function network element, performing verification based on first key verification information stored in an NRF, or performing verification based on a first token issued by the NRF. For the foregoing verification manner, refer to the descriptions of the manner of verifying the identifier of the NF in S104. Details are not described again. For example, for descriptions of performing the verification based on the trust information of the network function network element, refer to Manner 1, or the procedure in FIG. 3, FIG. 7, or FIG. 10. For descriptions of performing the verification based on the first key verification information stored in the NRF, refer to Manner 2, or the procedure in FIG. 4A and FIG. 4B, FIG. 8, or FIG. 11A and FIG. 11B. For descriptions of performing the verification based on the first token issued by the NRF, refer to Manner 3, or the procedure in FIG. 5A and FIG. 5B or FIG. 9. A difference lies in that, in the authentication procedure of the issuance phase, a message name related to the challenge response message in Manner 1 to Manner 3 may be replaced with a certificate request or a related message.

Optionally, after determining that the second verification succeeds, the first authentication device may store a second association relationship. The second association relationship may include an association relationship between the identifier of the NF and an account that is for sending the certificate request.

S1104: After determining that the second verification succeeds, the first authentication network element issues a first certificate corresponding to the identifier of the NF.

Based on the procedure shown in FIG. 12, the first authentication device may issue the first certificate corresponding to the identifier of the NF after performing the second verification based on the certificate request and determining that the second verification succeeds. Correspondingly, the NF may obtain the first certificate issued by the first authentication device. Based on the procedure shown in FIG. 12, verification of the identifier of the NF and certificate issuance may be supported or adapted in a certificate issuance phase in the ACME protocol.

In a possible embodiment, the first authentication device may issue the first certificate after performing third verification on the identifier of the NF based on the domain name or the IP address of the NF, to further improve security.

In an example of performing the third verification, the first authentication device may determine, based on the second association relationship, an account (referred to as a first account) associated with the identifier of the NF, where the account may be an account for sending the certificate request. In addition, the first authentication device may determine, based on the domain name (or the IP address) of the NF in the certificate request message and the first association relationship, an account (referred to as a second account) associated with the domain name (or the IP address) of the NF. If the first account is the same as the second account (that is, public keys of the accounts or public key identifiers of the accounts are the same), it may be determined that there is an association relationship, namely, a third association relationship, between an identifier of an NF and a domain name (or an IP address) of the NF that are associated with a same account. The third association relationship may be an association relationship between the domain name (or the IP address) of the NF and the identifier of the NF. The first authentication device may perform the third verification based on the third association relationship, that is, compare the domain name (or the IP address) of the NF and the identifier of the NF in the third association relationship with the domain name (or the IP address) of the NF and the identifier of the NF in the certificate request message. If they are the same, it may be determined that the third verification succeeds; otherwise, if they are different, it may be determined that the third verification fails.

In S1104, the first authentication device may issue the first certificate when determining that the third verification succeeds.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

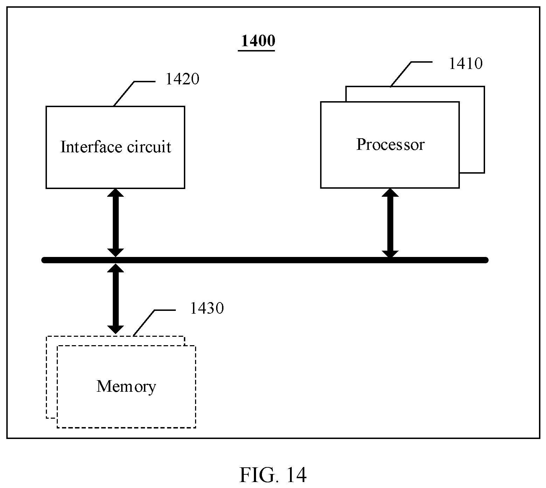

FIG. 13 and FIG. 14 are diagrams of possible structures of communication apparatuses according to embodiments of this application. These communication apparatuses may be configured to implement a function of a network element or a device such as the NF, the first authentication device, or the second authentication device in the foregoing method embodiments, and therefore can also implement beneficial effects in the foregoing method embodiments. In embodiments of this application, the communication apparatus may be an NF, a first authentication device, or a second authentication device, or may be a component, such as a functional module or a chip, used in the foregoing module or network element.

As shown in FIG. 13, a communication apparatus 1300 includes a processing unit 1310 and a transceiver unit 1320. The communication apparatus 1300 is configured to implement a function of the NF, the first authentication device, or the second authentication device in the method embodiment shown in any one of the flowcharts in FIG. 2 to FIG. 12. The transceiver unit 1320 may be configured to perform a receiving and/or sending action. The processing unit 1310 may be configured to perform an action other than receiving and sending.

For example, when the communication apparatus 1300 is configured to implement the function of the NF in the method embodiment shown in FIG. 2, the transceiver unit 1320 may be configured to send an order request, receive a challenge message, and send a challenge response message. In addition, the transceiver unit 1320 may be further configured to obtain a first certificate by sending a certificate request.

For another example, when the communication apparatus 1300 is configured to implement the function of the first authentication device in the method embodiment shown in FIG. 2, the transceiver unit 1320 may be configured to receive an order request, send a challenge message, and receive a challenge response message. In addition, the processing unit 1310 may be further configured to perform verification based on an identifier of an NF and/or first information. The transceiver unit 1320 may further receive a certificate request, and the processing unit 1310 may further issue a first certificate.

For functions of the processing unit 1310 and the transceiver unit 1320 in other embodiments, refer to the actions in embodiments. Details are not described again.

For more detailed descriptions of the processing unit 1310 and the transceiver unit 1320, refer to related descriptions in the method embodiment shown in FIG. 3.

As shown in FIG. 14, a communication apparatus 1400 includes at least one processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include at least one memory 1430, configured to store instructions executed by the processor 1410, store input data required by the processor 1410 to run instructions, or store data generated after the processor 1410 runs instructions. When the communication apparatus 1400 is configured to implement the method shown in FIG. 4A and FIG. 4B, the processor 1410 is configured to implement functions of the processing unit 1310, and the interface circuit 1420 is configured to implement functions of the transceiver unit 1320.

When the communication apparatus is a chip used in the NF, the first authentication device, or the second authentication device, the chip implements a function of the NF, the first authentication device, or the second authentication device in the foregoing method embodiments. The chip may receive, via another module (for example, a communications interface) in the NF, the first authentication device, or the second authentication device, information sent by another network element or device, or the chip sends information to another module (for example, a communications interface) in the NF, the first authentication device, or the second authentication device. The information is sent by the NF, the first authentication device, or the second authentication device to another network element or device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an NF network element, a management device, a first authentication device, a second device, or a CMF network element. The processor and the storage medium may also exist in the NF network element, the management device, the first authentication device, the second device, or the CMF network element as discrete components.

An embodiment of this application further provides a communication system, including one or more network elements or apparatuses of an NF, a first authentication device, or a second authentication device configured to implement the foregoing method embodiments, and configured to implement the communication method in any one of FIG. 2 to FIG. 12.

An embodiment of this application further provides a computer-readable storage medium. The computer-readable storage medium is configured to store a computer program or instructions. When the computer program or the instructions are run, the method shown in the foregoing method embodiments is implemented.

An embodiment of this application further provides a computer program product. When the computer program product runs on a computer, the method shown in the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
sending an order request, wherein the order request comprises an identifier of a network function network element, and the order request is for requesting to create an order of issuing a first certificate for the identifier of the network function network element;
receiving a challenge message, wherein the challenge message comprises verification manner information, and the verification manner information indicates a manner of verifying the identifier of the network function network element in the order;
sending a challenge response message based on the verification manner information, wherein the challenge response message comprises the identifier of the network function network element and/or first information obtained based on the identifier of the network function network element, and the identifier of the network function network element and/or the first information are/is for verifying the identifier of the network function network element in the order; and
obtaining the first certificate by sending a certificate request message, wherein the certificate request message is for completing the order.

2. The method according to claim 1, wherein the verification manner is performing the verification based on trust information of the network function network element, and the first information comprises the trust information; and
the trust information comprises at least one of the following:
a second certificate of the network function network element, wherein the second certificate comprises the identifier of the network function network element;
first signature information obtained by signing the identifier of the network function network element; or
a first message authentication code obtained based on a symmetric key and the identifier of the network function network element.

3. The method according to claim 1, wherein the challenge response message comprises the identifier of the network function network element, and the verification manner is performing the verification based on first key verification information stored in a network repository function network element.

4. The method according to claim 3, wherein the method further comprises:
sending a registration request message to the network repository function network element, wherein the registration request message comprises the identifier of the network function network element and the first key verification information, and the first key verification information is determined based on a public key of an account of the network function network element.

5. The method according to claim 1, wherein the verification manner is performing the verification based on a first token issued by an operations and maintenance network entity in an operator network, and the first information comprises the first token.

6. The method according to claim 5, wherein the first token is obtained based on a private key of the network repository function network element.

7. The method according to claim 5 or 6, wherein the first token comprises:
information indicating that the first token is used for the verification; and/or
indication information of a public key of an account of the network function network element.

8. The method according to claim 5 or 6, wherein the method further comprises:
sending at least one of the following information:
information indicating that a token of the network function network element is used for the verification; or
indication information of a public key of an account of the network function network element.

9. The method according to any one of claims 1 to 8, wherein the challenge response message further comprises second signature information obtained based on a private key of the account of the network function network element.

10. The method according to any one of claims 1 to 9, wherein the certificate request message comprises the identifier of the network function network element.

11. The method according to any one of claims 1 to 10, wherein the challenge response message further comprises indication information of a public key of the network function network element.

12. A communication method, comprising:
receiving an order request, wherein the order request comprises an identifier of a network function network element, and the order request is for requesting to create an order of issuing a first certificate for the identifier of the network function network element;
determining, based on the identifier of the network function network element, a verification manner of verifying the identifier of the network function network element;
sending a challenge message, wherein the challenge message comprises verification manner information, and the verification manner information indicates the verification manner;
receiving a challenge response message corresponding to the verification manner information, wherein the challenge response message comprises the identifier of the network function network element and/or first information obtained based on the identifier of the network function network element;
performing the verification based on the identifier of the network function network element and/or the first information; and
receiving a certificate request message, wherein the certificate request message is for completing the order, and issuing the first certificate when the verification succeeds.

13. The method according to claim 12, wherein the verification manner is performing the verification based on trust information of the network function network element, and the first information comprises the trust information; and
the trust information comprises at least one of the following:
a second certificate of the network function network element, wherein the second certificate comprises the identifier of the network function network element;
first signature information obtained by signing the identifier of the network function network element; or
a first message authentication code obtained based on a symmetric key and the identifier of the network function network element.

14. The method according to claim 13, wherein the trust information comprises the second certificate, and performing the verification based on the first information comprises:
obtaining a root certificate of the second certificate; and
verifying the second certificate based on the root certificate.

15. The method according to claim 13 or 14, wherein the trust information comprises the first signature information, the first signature information is obtained by signing the identifier of the network function network element based on a private key of a second authentication device, and performing the verification based on the first information comprises:
obtaining a public key of the second authentication device; and
verifying the first signature information based on the public key of the second authentication device.

16. The method according to any one of claims 13 to 15, wherein the trust information comprises the first message authentication code, and performing the verification based on the first information comprises:
obtaining the symmetric key based on the identifier of the network function network element;
obtaining a second message authentication code based on the symmetric key and the identifier of the network function network element; and
comparing the first message authentication code with the second message authentication code.

17. The method according to claim 12, wherein the challenge response message comprises the identifier of the network function network element, and the verification manner is performing the verification based on first key verification information stored in a network repository function network element.

18. The method according to claim 17, wherein the first key verification information is determined based on a public key of an account of the network function network element; and
performing the verification based on the identifier of the network function network element comprises:
obtaining the first key verification information from the network repository function network element based on the identifier of the network function network element; and
verifying the first key verification information based on the public key of the account of the network function network element.

19. The method according to claim 12, wherein the verification manner is performing the verification based on a first token issued by an operations and maintenance network entity in an operator network, and the first information comprises the first token.

20. The method according to claim 19, wherein the first token is obtained based on a private key of the operations and maintenance network entity, and performing the verification based on the first information comprises:
verifying the first token based on a public key of the operations and maintenance network entity.

21. The method according to claim 19 or 20, wherein the first token comprises:
information indicating that the first token is used for the verification; and/or
indication information of a public key of an account of the network function network element.

22. The method according to claim 19 or 20, wherein the method further comprises:
sending at least one of the following information:
information indicating that a token of the network function network element is used for the verification; or
indication information of a public key of an account of the network function network element.

23. The method according to any one of claims 12 to 22, wherein the challenge response message further comprises second signature information obtained based on a private key of the account of the network function network element; and the method further comprises:
obtaining a public key of the network function network element; and
verifying the second signature information based on the public key of the account of the network function network element.

24. The method according to claim 23, wherein after the verification of the second signature information succeeds and the verification succeeds, the method further comprises:
determining an association relationship between the identifier of the network function network element and the account.

25. The method according to claim 23 or 24, wherein the challenge response message further comprises indication information of the public key of the network function network element.

26. The method according to any one of claims 12 to 25, wherein the certificate request message comprises the identifier of the network function network element.

27. A communication method, comprising:
sending an account request, wherein the account request is for requesting to create or update an account of a network function network element, the account request comprises an identifier of the network function network element and/or first information obtained based on the identifier of the network function network element, and the identifier of the network function network element and/or the first information are/is for verifying the identifier of the network function network element; and
receiving an account response message, wherein the account response message indicates that creation of the account is completed; and the network function network element obtains, by sending a certificate request message, a first certificate issued for the identifier of the network function network element.

28. The method according to claim 27, wherein the first information comprises trust information; and
the trust information comprises at least one of the following:
a second certificate of the network function network element, wherein the second certificate comprises the identifier of the network function network element;
first signature information obtained by signing the identifier of the network function network element; or
a first message authentication code obtained based on a symmetric key and the identifier of the network function network element.

29. The method according to claim 27, wherein the first information comprises a first token.

30. The method according to claim 29, wherein the first token is obtained based on a private key of an operations and maintenance network entity in an operator network.

31. The method according to claim 29 or 30, wherein the first token further comprises:
information indicating that the first token is used for the verification; and/or
indication information of a public key of an account of the network function network element.

32. The method according to claim 29 or 30, wherein the method further comprises:
sending at least one of the following information:
information indicating that a token of the network function network element is used for the verification; or
indication information of a public key of an account of the network function network element.

33. The method according to any one of claims 27 to 32, wherein the identifier of the network function network element in the account request is carried in an external account binding identifier field.

34. The method according to any one of claims 27 to 33, wherein the account request further comprises second signature information obtained based on a private key of the account of the network function network element.

35. The method according to any one of claims 27 to 34, wherein the certificate request message comprises the identifier of the network function network element.

36. The method according to any one of claims 27 to 35, wherein the account request and/or the certificate request message further comprise/comprises indication information of a public key of the network function network element.

37. A communication method, comprising:
receiving an account request, wherein the account request is for requesting to create or update an account of a network function network element, and the account request comprises an identifier of the network function network element and/or first information obtained based on the identifier of the network function network element; and
verifying the identifier of the network function network element based on the identifier of the network function network element and/or the first information.

38. The method according to claim 37, wherein the first information comprises trust information; and
the trust information comprises at least one of the following:
a second certificate of the network function network element, wherein the second certificate comprises the identifier of the network function network element;
first signature information obtained by signing the identifier of the network function network element; or
a first message authentication code obtained based on a symmetric key and the identifier of the network function network element.

39. The method according to claim 38, wherein the trust information comprises the second certificate, and performing the verification based on the first information comprises:
obtaining a root certificate of the second certificate; and
verifying the second certificate based on the root certificate.

40. The method according to claim 38 or 39, wherein the trust information comprises the first signature information, the first signature information is obtained by signing the identifier of the network function network element based on a private key of a second authentication device, and performing the verification based on the first information comprises:
obtaining a public key of the second authentication device; and
verifying the first signature information based on the public key of the second authentication device.

41. The method according to any one of claims 38 to 40, wherein the trust information comprises the first message authentication code, and performing the verification based on the first information comprises:
obtaining the symmetric key based on the identifier of the network function network element;
obtaining a second message authentication code based on the symmetric key and the identifier of the network function network element; and
comparing the first message authentication code with the second message authentication code.

42. The method according to claim 37, wherein the account request comprises the identifier of the network function network element, and the verification manner is performing the verification based on first key verification information stored in a network repository function network element.

43. The method according to claim 42, wherein the first key verification information is determined based on a public key of the account of the network function network element; and
performing the verification based on the identifier of the network function network element comprises:
obtaining the first key verification information from the network repository function network element based on the identifier of the network function network element; and
verifying the first key verification information based on the public key of the account of the network function network element.

44. The method according to claim 43, wherein verifying the first key verification information based on the public key of the account of the network function network element comprises:
determining second key verification information based on the public key of the account of the network function network element; and
comparing the second key verification information with the first key verification information.

45. The method according to claim 37, wherein the first information comprises a first token.

46. The method according to claim 45, wherein the first token is obtained based on a private key of an operations and maintenance network entity in an operator network, and performing the verification based on the first information comprises:
verifying the first token based on a public key of the operations and maintenance network entity.

47. The method according to claim 45 or 46, wherein the first token comprises:
information indicating that the first token is used for the verification; and/or
indication information of a public key of an account of the network function network element.

48. The method according to claim 45 or 46, wherein the method further comprises:
receiving at least one of the following information:
information indicating that a token of the network function network element is used for the verification; or
indication information of a public key of an account of the network function network element.

49. The method according to any one of claims 37 to 48, wherein the account request further comprises second signature information obtained based on a private key of the account of the network function network element; and the method further comprises:
obtaining a public key of the network function network element; and
verifying the second signature information based on the public key of the account of the network function network element.

50. The method according to claim 49, wherein after the verification of the second signature information succeeds and the verification succeeds, the method further comprises:
determining an association relationship between the identifier of the network function network element and the account.

51. The method according to claim 49 or 50, wherein the account request and/or a certificate request message further comprise/comprises indication information of the public key of the network function network element.

52. The method according to any one of claims 37 to 51, wherein the certificate request message comprises the identifier of the network function network element.

53. A communication method, comprising:
receiving an account response message, wherein the account response message indicates that account creation is completed or account update is completed, and the account response message comprises account indication information;
sending a pre-authorization request, wherein the pre-authorization request comprises indication information of an account of a network function network element, the pre-authorization request further comprises an identifier of the network function network element and/or first information obtained based on the identifier of the network function network element, and the pre-authorization request is for requesting to pre-authorize the account and is for requesting to verify the identifier of the network function network element;
receiving a pre-authorization response message, wherein the pre-authorization response message indicates that the pre-authorization of the account is completed, and indicates that the verification succeeds; and
obtaining, by sending a certificate request, a first certificate issued for the identifier of the network function network element.

54. The method according to claim 53, wherein the first information comprises trust information; and
the trust information comprises at least one of the following:
a second certificate of the network function network element, wherein the second certificate comprises the identifier of the network function network element;
first signature information obtained by signing the identifier of the network function network element; or
a first message authentication code obtained based on a symmetric key and the identifier of the network function network element.

55. The method according to claim 53, wherein the first information comprises a first token.

56. The method according to claim 55, wherein the first token is obtained based on a private key of an operations and maintenance network entity in an operator network.

57. The method according to claim 55 or 56, wherein the first token comprises:
information indicating that the first token is used for the verification; and/or
indication information of a public key of the account of the network function network element.

58. The method according to claim 55 or 56, wherein the method further comprises:
sending at least one of the following information:
information indicating that a token of the network function network element is used for the verification; or
indication information of a public key of the account of the network function network element.

59. The method according to any one of claims 53 to 58, wherein the pre-authorization request further comprises second signature information obtained based on a private key of the account of the network function network element.

60. The method according to any one of claims 53 to 59, wherein the certificate request message comprises the identifier of the network function network element.

61. The method according to any one of claims 53 to 60, wherein the certificate request further comprises indication information of a public key of the network function network element.

62. A communication method, comprising:
sending an account response message, wherein the account response message indicates that account creation or update is completed, and the account response message comprises account indication information;
receiving a pre-authorization request, wherein the pre-authorization request comprises indication information of an account of a network function network element, the pre-authorization request further comprises an identifier of the network function network element and/or first information obtained based on the identifier of the network function network element, and the pre-authorization request is for requesting to pre-authorize the account and is for requesting to verify the identifier of the network function network element;
verifying the identifier of the network function network element based on the identifier of the network function network element and/or the first information; and
sending a pre-authorization response message when determining that the verification succeeds, wherein the pre-authorization response message indicates that the pre-authorization of the account is completed; and/or receiving a certificate request message, and issuing a first certificate for the identifier of the network function network element when determining that the verification succeeds.

63. The method according to claim 62, wherein the first information comprises trust information; and
the trust information comprises at least one of the following:
a second certificate of the network function network element, wherein the second certificate comprises the identifier of the network function network element;
first signature information obtained by signing the identifier of the network function network element; or
a first message authentication code obtained based on a symmetric key and the identifier of the network function network element.

64. The method according to claim 63, wherein the trust information comprises the second certificate, and performing the verification based on the first information comprises:
obtaining a root certificate of the second certificate; and
verifying the second certificate based on the root certificate.

65. The method according to claim 63 or 64, wherein the trust information comprises the first signature information, the first signature information is obtained by signing the identifier of the network function network element based on a private key of a second authentication device, and performing the verification based on the first information comprises:
obtaining a public key of the second authentication device; and
verifying the first signature information based on the public key of the second authentication device.

66. The method according to any one of claims 63 to 65, wherein the trust information comprises the first message authentication code, and performing the verification based on the first information comprises:
obtaining the symmetric key based on the identifier of the network function network element;
obtaining a second message authentication code based on the symmetric key and the identifier of the network function network element; and
comparing the first message authentication code with the second message authentication code.

67. The method according to claim 62, wherein the pre-authorization request comprises the identifier of the network function network element, and the verification manner is performing the verification based on first key verification information stored in a network repository function network element.

68. The method according to claim 67, wherein the first key verification information is determined based on a public key of the account of the network function network element; and
performing the verification based on the identifier of the network function network element comprises:
obtaining the first key verification information from the network repository function network element based on the identifier of the network function network element; and
verifying the first key verification information based on the public key of the account of the network function network element.

69. The method according to claim 68, wherein verifying the first key verification information based on the public key of the account of the network function network element comprises:
determining second key verification information based on the public key of the account of the network function network element; and
comparing the second key verification information with the first key verification information.

70. The method according to claim 62, wherein the first information comprises a first token.

71. The method according to claim 70, wherein the first token is obtained based on a private key of an operations and maintenance network entity in an operator network, and performing the verification based on the first information comprises:
verifying the first token based on a public key of the operations and maintenance network entity.

72. The method according to claim 70 or 71, wherein the first token comprises:
information indicating that the first token is used for the verification; and/or
indication information of a public key of the account of the network function network element.

73. The method according to claim 70 or 71, wherein the method further comprises:
receiving at least one of the following information:
information indicating that a token of the network function network element is used for the verification; or
indication information of a public key of the account of the network function network element.

74. The method according to any one of claims 62 to 73, wherein the pre-authorization request further comprises second signature information obtained based on a private key of the account of the network function network element; and the method further comprises:
obtaining a public key of the network function network element; and
verifying the second signature information based on the public key of the account of the network function network element.

75. The method according to claim 74, wherein after the verification of the second signature information succeeds and the verification succeeds, the method further comprises:
determining an association relationship between the identifier of the network function network element and the account.

76. The method according to any one of claims 62 to 75, wherein the certificate request comprises the identifier of the network function network element.

77. The method according to any one of claims 62 to 76, wherein the certificate request further comprises indication information of the public key of the network function network element.

78. A communication method, comprising:
sending a challenge response message, wherein the challenge response message indicates a first authentication device to perform first verification on a domain name or an IP address of a network function network element;
sending a certificate request, wherein the certificate request comprises an identifier of the network function network element and/or first information obtained based on the identifier of the network function network element, the certificate request is for requesting a first certificate corresponding to the identifier of the network function network element, and the identifier of the network function network element and/or the first information are/is used by the first authentication device to perform second verification on the identifier of the network function network element; and
obtaining the first certificate, wherein the first certificate is issued by the first authentication device after determining that the second verification succeeds, wherein
the first verification is verification performed based on the domain name or the internet protocol address of the network function network element; and/or
the second verification is verification performed based on the identifier of the network function network element and/or the first information.

79. The method according to claim 78, wherein the first information comprises trust information; and
the trust information comprises at least one of the following:
a second certificate of the network function network element, wherein the second certificate comprises the identifier of the network function network element;
first signature information obtained by signing the identifier of the network function network element; or
a first message authentication code obtained based on a symmetric key and the identifier of the network function network element.

80. The method according to claim 78, wherein the certificate request comprises the identifier of the network function network element, and the verification manner is performing the verification based on first key verification information stored in a network repository function network element.

81. The method according to claim 80, wherein the method further comprises:
sending a registration request message to the network repository function network element, wherein the registration request message comprises the identifier of the network function network element and the first key verification information, and the first key verification information is determined based on a public key of an account of the network function network element.

82. The method according to claim 78, wherein the first information comprises a first token.

83. The method according to claim 82, wherein the first token is obtained based on a private key of an operations and maintenance network entity in an operator network.

84. The method according to claim 82 or 83, wherein the first token comprises:
information indicating that the first token is used for the verification; and/or
indication information of a public key of the account of the network function network element.

85. The method according to claim 82 or 83, wherein the method further comprises:
sending at least one of the following information:
information indicating that a token of the network function network element is used for the verification; or
indication information of a public key of an account of the network function network element.

86. The method according to any one of claims 78 to 85, wherein the certificate request further comprises second signature information obtained based on a private key of the account of the network function network element.

87. The method according to any one of claims 78 to 86, wherein the certificate request comprises the domain name or the IP address of the network function network element, and the domain name or the IP address of the network function network element is for performing third verification on the identifier of the network function network element.

88. A communication method, comprising:
performing first verification on a domain name or an IP address of a network function network element;
receiving a certificate request, wherein the certificate request comprises an identifier of the network function network element and/or first information obtained based on the identifier of the network function network element, and the certificate request is for requesting a first certificate corresponding to the identifier of the network function network element;
after determining that the first verification succeeds, performing second verification on the identifier of the network function network element based on the identifier of the network function network element and/or the first information; and
issuing the first certificate for the identifier of the network function network element after determining that the second verification succeeds.

89. The method according to claim 88, wherein the first information comprises trust information; and
the trust information comprises at least one of the following:
a second certificate of the network function network element, wherein the second certificate comprises the identifier of the network function network element;
first signature information obtained by signing the identifier of the network function network element; or
a first message authentication code obtained based on a symmetric key and the identifier of the network function network element.

90. The method according to claim 89, wherein the trust information comprises the second certificate, and performing the second verification based on the first information comprises:
obtaining a root certificate of the second certificate; and
verifying the second certificate based on the root certificate.

91. The method according to claim 89 or 90, wherein the trust information comprises the first signature information, the first signature information is obtained by signing the identifier of the network function network element based on a private key of a second authentication device, and performing the second verification based on the first information comprises:
obtaining a public key of the second authentication device; and
verifying the first signature information based on the public key of the second authentication device.

92. The method according to any one of claims 89 to 91, wherein the trust information comprises the first message authentication code, and performing the second verification based on the first information comprises:
obtaining the symmetric key based on the identifier of the network function network element;
obtaining a second message authentication code based on the symmetric key and the identifier of the network function network element; and
comparing the first message authentication code with the second message authentication code.

93. The method according to claim 88, wherein the pre-authorization request comprises the identifier of the network function network element, and a manner of the second verification is performing the verification based on first key verification information stored in a network repository function network element.

94. The method according to claim 93, wherein the first key verification information is determined based on a public key of an account of the network function network element; and
performing the second verification based on the identifier of the network function network element comprises:
obtaining the first key verification information from the network repository function network element based on the identifier of the network function network element; and
verifying the first key verification information based on the public key of the account of the network function network element.

95. The method according to claim 94, wherein verifying the first key verification information based on the public key of the account of the network function network element comprises:
determining second key verification information based on the public key of the account of the network function network element; and
comparing the second key verification information with the first key verification information.

96. The method according to claim 88, wherein the first information comprises a first token.

97. The method according to claim 96, wherein the first token is obtained based on a private key of an operations and maintenance network entity in an operator network, and performing the second verification based on the first information comprises:
verifying the first token based on a public key of the operations and maintenance network entity.

98. The method according to claim 96 or 97, wherein the first token further comprises:
information indicating that the first token is used for the verification; and/or
indication information of a public key of an account of the network function network element.

99. The method according to claim 96 or 97, wherein the method further comprises:
sending at least one of the following information:
information indicating that a token of the network function network element is used for the verification; or
indication information of a public key of an account of the network function network element.

100. The method according to any one of claims 88 to 99, wherein the certificate request further comprises second signature information obtained based on a private key of the account of the network function network element; and the method further comprises:
obtaining a public key of the network function network element; and
verifying the second signature information based on the public key of the account of the network function network element.

101. The method according to claim 100, wherein after the verification of the second signature information succeeds and the verification succeeds, the method further comprises:
determining an association relationship between the identifier of the network function network element and the account.

102. The method according to any one of claims 88 to 101, wherein the certificate request further comprises the domain name or the IP address of the network function network element, and before issuing, by a first authentication device, the first certificate, the method further comprises:
performing third verification on the identifier of the network function network element based on the domain name or the IP address of the network function network element.

103. A communication apparatus, comprising a unit or a module configured to perform the method according to any one of claims 1 to 102.

104. A communication apparatus, comprising a processor, wherein the processor is configured to execute a computer program or instructions, to implement the method according to any one of claims 1 to 102.

105. A computer-readable storage medium, wherein the storage medium stores a computer program or instructions; and when the computer program or the instructions are executed by a communication apparatus, the method according to any one of claims 1 to 102 is implemented.

106. A computer program product, wherein when the computer program product is executed by a computer, the computer is caused to perform the method according to any one of claims 1 to 102.

107. A communication system, comprising:
a first communication apparatus and a second communication apparatus, wherein
the first communication apparatus is configured to perform the method according to any one of claims 1 to 11, and the second communication apparatus is configured to perform the method according to any one of claims 12 to 26;
the first communication apparatus is configured to perform the method according to any one of claims 27 to 36, and the second communication apparatus is configured to perform the method according to any one of claims 37 to 52;
the first communication apparatus is configured to perform the method according to any one of claims 53 to 61, and the second communication apparatus is configured to perform the method according to any one of claims 62 to 77; or
the first communication apparatus is configured to perform the method according to any one of claims 78 to 87, and the second communication apparatus is configured to perform the method according to any one of claims 88 to 102.
